# EUROPÄISCHE PATENTSCHRIFT

(11) **EP 3 717 690 B1**
(45) Veröffentlichungstag und Bekanntmachung des Hinweises auf die Patenterteilung: **01.10.2025**
(21) Anmeldenummer: 18810968.0
(22) Anmeldetag: 23.11.2018
(51) Int. Cl.: D06H 7/24, A41H 43/00, B26D 5/00, B26D 7/01

(54) **VERFAHREN ZUM SCHNEIDEN VON SCHNITT-TEILEN UND VORRICHTUNG ZUM SCHNEIDEN**
METHOD FOR CUTTING CUT PARTS, AND CUTTING DEVICE
PROCÉDÉ DE COUPE DE PIÈCES DÉCOUPÉES ET DISPOSITIF DE COUPE

(30) Priorität: 30.11.2017 DE 102017128394
(43) Veröffentlichungstag der Anmeldung: 07.10.2020
(73) Patentinhaber: Held Industries GmbH, 63150 Heusenstamm (DE)
(72) Erfinder: HELD, Gunnar, 63150 Heusenstamm (DE); ZINKE, Achim, 63150 Heusenstamm (DE)
(74) Vertreter: Ter Meer Steinmeister & Partner
(86) Internationale Anmeldenummer: PCT/EP2018/082398
(87) Internationale Veröffentlichungsnummer: WO 2019/105863

(56) Entgegenhaltungen:
- EP-A2- 1 321 839
- WO-A1-01/04805
- WO-A1-03/029540
- WO-A1-91/17029
- DE-A1- 102014 017 501
- US-A- 3 761 675
- US-A- 5 806 390
- US-A1- 2008 084 053

## Beschreibung

Die Erfindung betrifft ein Verfahren zum Schneiden von Schnitt-Teilen, die beispielsweise auf einer einlagigen Materialbahn angeordnet sind sowie eine Vorrichtung zum Schneiden mittels eines Schneidwerkzeugs. Das erfindungsgemäße Verfahren ist insbesondere dazu geeignet, Schnitt-Teile für Airbags aus der Materialbahn auszuschneiden. Vorzugsweise wird das Verfahren in Verbindung mit einer Laser-Schneid-Vorrichtung als Schneidwerkzeug verwendet.

### HINTERGRUND DER ERFINDUNG

Beispielsweise ist aus der DE 10 2014 017 501 A1 ein Verfahren zum Ausschneiden von Gegenständen aus einer zumindest teilweise zweilagigen Materialbahn mittels einer Schneidvorrichtung bekannt. Diese Gegenstände werden dabei basierend auf Schnitt-Teilen eines Schneidmusters aus der Materialbahn zugeschnitten. Diese Gegenstände können Kleidungsstücke, Möbelpolsterung und/oder auch Airbags betreffen.

Beispielsweise wird dazu das Material als Rollenmaterial bereitgestellt. Das Material wird gemäß einer festgelegten Länge von einer Rolle abgerollt und dabei auf einem Schneidetisch platziert. Sodann wird eine weitere Lage des Materials gemäß der gleichen festgelegten Länge von der Rolle abgerollt und exakt oberhalb der ersten Lage des Materials angeordnet. Dieses Anordnen von weiteren Lagen wird solange wiederholt, bis eine gewünschte Anzahl von Lagen des Materials auf dem Schneidetisch übereinanderliegend angeordnet ist. Mittels eines Schneidwerkzeugs kann diese Anzahl von Lagen nun zeitgleich zugeschnitten werden. Auf diese Weise wird das Schneidwerkzeug effizient genutzt und das Zuschneiden des Materials beschleunigt, da die einzelnen Schnitt-Teile in den einzelnen Materiallagen zeitgleich zugeschnitten werden.

In vielen Anwendungsfällen dieser Schneide-Verfahren, wie es beispielsweise auch bei der Herstellung von Airbag-Zuschnitten der Fall ist, müssen die Schnitt-Teile exakt zugeschnitten werden, um alle sicherheitsrelevanten Aspekte an die Haltbarkeit des Gegenstands, beispielsweise bei einem Einsatz eines hohen Drucks im Inneren des Gegenstands, zu erfüllen. Werden viele Materialbahnen übereinandergelegt und dann zeitgleich zugeschnitten, so müssen Sicherheitsabstände zwischen den einzelnen Schnitt-Teilen und an den Außenrändern jeder Materialbahn definiert werden, um die Form des Schnitt-Teils nicht fehlerhaft zuzuschneiden. Diese Sicherheits-Abstände oder Sicherheitsbereiche sind mehrere Zentimeter groß und vergrößern den Materialverbrauch pro Lage der Materialbahn signifikant.

Der Teil des Materials, der nach dem Zuschnitt für kein weiteres Schnitt-Teil mehr verwendet wird, beziehungsweise verwendet werden kann, wird als Materialverschnitt bezeichnet. Dieser Materialverschnitt entsteht beispielsweise, weil der nach dem Zuschnitt überschüssige, also übrig bleibende Teil der Materialbahn einen zu geringen Flächeninhalt für ein weiteres Schnitt-Teil aufweist oder der übrig bleibende Teil der Materialbahn keinen Bereich aufweist, in dem ein weiteres Schnitt-Teil des Schneidmusters vollumfänglich platziert werden kann. Dieser Materialverschnitt kann also zumeist nicht weiterverwendet werden und ist ein Abfallprodukt des Schneide-Verfahrens. Speziell bei kostenintensiven Materialbahnen, wie beispielsweise der Airbag Produktion, sollte der übrigbleibende Teil der Materialbahn auf ein Minimum reduziert werden.

Beim Schneiden von Schneidmustern, auch als "cut-set" bezeichnet, aus einer Materialbahn, sollten die einzelnen Schnitt-Teile demnach möglichst platzsparend angeordnet werden, um den Materialverschnitt auf ein Minimum zu beschränken. Beispielsweise werden dazu spezielle Verschachtelungs-Methoden angewendet, um die Schnitt-Teile, die zu einem Schneidmuster gehören, platzsparend anzuordnen.

Diese Verschachtelungs-Methoden sind heutzutage ausschließlich für rechteckige Abschnitte einer Materialbahn konzipiert und optimieren das Material ausschließlich in Bezug auf die Länge oder diskrete Breiten des Rechtecks, in dem die Schnitt-Teile eines oder mehrerer Schneidmuster platziert werden. Aufgrund des zeitgleichen Schneidens einer großen Anzahl von übereinanderliegenden Materialbahn-Lagen, beispielsweise bis zu 40 Lagen, und den dabei zu berücksichtigenden Sicherheitsabständen, ist der Materialverschnitt trotz dieser Verschachtelungs-Methoden zu groß und aufgrund des daraus resultierenden Abfalls ist der Materialverbrauch bei Anwendung der heutigen Schneideverfahren in unerwünschter Weise stark verteuert. Üblicherweise wird ein Sicherheitsbereich von 25 bis 50 Millimetern am Anfang und Ende einer jeden Materialbahn-Lage hinzugefügt. Dies ist beispielsweise beim Schneiden mehrerer Lagen notwendig, um ein Verrutschen der Lagen untereinander auszugleichen.

Die Aufgabe der hier vorliegenden Erfindung ist es daher, den Materialverbrauch beim Zuschneiden von Schnitt-Teilen eines Schneidmusters erheblich zu reduzieren.

US 3761 675 beschreibt ein Stoffschneidesystem, bei dem Stoff in einer einzigen Lage in einem Schneidebereich transportiert wird, in dem ein Laserstrahl auf den Stoff fokussiert und durch Computerbefehle so gesteuert wird, dass er sich innerhalb des Schneidebereichs bewegt, um eine Vielzahl von Mustern schnell und genau zu schneiden.

EP 1 321 839 A2 beschreibt ein Verfahren und eine Vorrichtung zum Ausschneiden von bewegtem Blattmaterial mit voreingestellten Formen, bei dem die Koordinaten eines oder mehrerer Referenzpunkte im Blattmaterial mit einem Visionssystem lokalisiert werden.

WO 03/029540 beschreibt ein Verfahren zum Herstellen von gewebten wenigstens teilweise mehrlagigen Airbags, das folgende Verfahrensschritte enthält: a) Vorbereiten der Kettfäden in der Schärerei, wobei als Kennfäden geeignete Kettfäden für maschinenlesbare Markierungen bereits in der Kettschar untergebracht werden, b) Weben des Airbaggewebes, wobei als Kennfäden geeignete Schussfädden für maschinenlesbare Markierungen über wenigstens einen Teil der Tuchbreite eingewebt werden, c) Ausschneiden der Airbags aus dem Airbaggewebe mit einer Schneidvorrichtung, wobei die Schneidvorrichtung von den eingewebten maschinenlesbaren Markierungen geführt wird.

Ein Verfahren zum Schneiden von Schnitt-Teilen gemäß dem Oberbegriff des Anspruchs 1 ist aus US 2008/084053 A1 schon bekannt.

### ZUSAMMENFASSUNG DER ERFINDUNG

Die Aufgabe wird mit den in den unabhängigen Patentansprüchen beschriebenen technischen Maßnahmen gelöst. Vorteilhafte Ausgestaltungen sind in den jeweils abhängigen Patentansprüchen beschrieben.

Insbesondere wird die Aufgabe durch ein Verfahren zum Schneiden von Schnitt-Teilen gelöst. Dabei bilden die Schnitt-Teile ein Schneidmuster. Das Verfahren umfasst das Schneiden der Schnitt-Teile, wobei die Schnitt-Teile in einem rechteckigen, sich wiederholenden Abschnitt einer endlosen Materialbahn angeordnet sind und wobei im Abschnitt zumindest ein Schnitt-Teil oder zumindest ein Schneidmuster teilweise enthalten ist.

Als Schneidmuster, auch Schnittmuster oder Schnittbild genannt, wird nachfolgend eine Vorlage bezeichnet, nach der das Material zugeschnitten wird. Das Schneidmuster weist dabei beispielsweise eine endliche Menge an verschiedenen und/oder gleichen Schnitt-Teilen auf, nach denen dann das Material zugeschnitten wird. Die Schnitt-Teile können verschiedene Formen aufweisen, die von Schnitt-Teil zu Schnitt-Teil stark variieren können. Zudem können einzelne Schnitt-Teile eines Schneidmusters mehrfach vorhanden sein, sodass ein Schneidmuster beispielsweise aus einer ersten Anzahl von Schnitt-Teilen einer ersten Form und einer gleichen oder verschiedenen Anzahl von Schnitt-Teilen einer zweiten Form bestehen kann. Beispielsweise werden Schneidmuster für Airbags zugeschnitten. Dabei weist ein Schneidmuster für einen Airbag zumindest ein Schnitt-Teil, im Allgemeinen aber mehrere Schnitt-Teile, bevorzugt fünf bis zehn verschiedenförmige Schnitt-Teile im Schneidmuster auf. Jedes dieser verschiedenförmigen Schnitt-Teile ist mindestens einmal, zumeist mehrfach im Schneidmuster vorhanden, um den Airbag zu bilden. Somit kann ein Schneidmuster aus einer Vielzahl gleichförmiger und/oder verschiedenförmiger Schnitt-Teile gebildet sein.

In einer bevorzugten Ausgestaltung ist die Materialbahn eine gewebte technische Textilie (englisch "Woven Fabric"). Diese besteht beispielsweise aus Kohlefaser, Glasfaser oder einem gemischten Material, beinhaltend beispielsweise Kohlefaser oder Glasfaser oder andere Kunststoffe oder Textilien. Die gewebte technische Textilie kann auch andere Kunststoffe oder Textilien beinhalten. Kenngrößen der gewebten Textilie sind das verwendetes Fasermaterial (Prozentangabe, beispielsweise 50% Baumwolle); Flächengewicht in g/m²; Fadendichte (Anzahl Kett- und Schussfäden pro Längeneinheit) und Bindungsart.

In einer bevorzugten Ausgestaltung ist das Material der Materialbahn ein Blech, bevorzugt Feinblech mit einer Materialdicke kleiner 3mm gemäß EN 10130 oder EN 10346, beispielsweise für Kraftfahrzeugteile; Metallindustrie; Elektrotechnik beziehungsweise Grobblech mit einer Materialdicke von mehr als 3mm gemäß EN 1007, beispielsweise im Schiff- und Bootsbau.

In einer bevorzugten Ausgestaltung ist die Materialbahn eine Folie, bevorzugt ein Metall mit einer Materialdicke kleiner 60µm, beispielsweise Stahlfolie, Aluminiumfolie, Stanniol oder Blattgold. Die Folie kann alternativ auch ein Kunststoff- oder ein Gummimaterial sein. Diese Folien sind beispielsweise Adhäsionsfolie, Glasdekorfolie, Klebefolie, Luftpolsterfolie, Schlauchfolie, Schrumpffolie, Sonnenschutzfolie, Stretch- bzw. Dehnfolie. Diese Folie ist beispielsweise einsetzbar als Batteriefolie oder Solarfolie.

In einer bevorzugten Ausgestaltung ist die Materialbahn aus Pappe (Pappkarton). Es werden verschiedene Papp-Typen unterschieden: Vollpappe, die einlagig und gegautscht, auch zusammengeklebt, beklebt, imprägniert oder beschichtet ist; Wickelpappe aus Holzstoff oder Altpapier; Graupappe/Braunpappe als Schutzmaterial oder Zwischenlagenmaterial; Hartpappe, wie Karosseriepappe, Schuhpappe, Jaquardpappe, Kofferpappe, Stanzpappe, Marmorpappe, Brandpappe; Leichtpappe; Archiv- bzw. Feinpappe. In einer Ausgestaltung ist die Materialbahn aus Papier also einem flächigen Werkstoff, der im Wesentlichen aus Fasern.

Papier, Karton und Pappe werden unter anderem anhand der flächenbezogenen Masse unterschieden. DIN 6730 vermeidet den Begriff Karton und unterscheidet allein Papier und Pappe, und zwar anhand des Grenzwerts 225 g/m². Umgangssprachlich ist Karton jedoch eine übliche Bezeichnung für ein Material im Bereich 150 g/m² bis 600 g/m², das typischerweise dicker und steifer ist als Papier.

In einer bevorzugten Ausgestaltung ist die Materialbahn aus Vliesstoff (englisch "Nonwoven Fabric"), einem Gebilde aus Fasern begrenzter Länge, Endlosfasern oder geschnittenen Garnen, die zu einem Vlies (Faserschicht, Faserflor) zusammengefügt und auf irgendeine Weise miteinander verbunden sind, beispielsweise mechanisch durch Reibschluss oder Reib-Formschluss oder chemisch oder thermisch. Dieser Vliesstoff ist beispielsweise einsetzbar als Filtermaterial, wie Luftfilter in einem Kfz.

Als "Schnitt-Teil" wird nachfolgend eine beliebig geformte zweidimensionale Form bezeichnet, also eine Fläche auf der Materialbahn mit einem beliebig ausgestalteten Umfang. Das Schnitt-Teil bildet dabei zumindest teilweise eine beliebige homogene oder heterogene Figur der euklidischen oder nichteuklidischen Geometrie ab, also beispielsweise ein beliebiges Polygon bzw. Polygonzug, Kreis, Kegelschnitt, Zykloid, Spirale, Fraktal oder eine andere beliebig-geformte Strecke oder Kurve.

Die Schnitt-Teile und das Schneidmuster müssen dabei nicht auf der Materialbahn markiert sein. Das heißt, eine Steuerung eines Schneidwerkzeugs führt die Bewegungen des Schneidwerkzeugs beispielsweise ohne Erkennung von Markierungspunkten/-linien auf der Materialbahn aus. In einer Ausgestaltung der Erfindung sind lediglich Randmarkierungen auf der Materialbahn vorhanden, um der Steuerung einen Soll-Ist-Vergleich einer Position des Schneidwerkzeugs zu ermöglichen.

Der Begriff "Materialbahn" bezeichnet eine Bahn aus Material, deren Breite über die gesamte Länge der Materialbahn konstant ist. Deren Breite kann mehrere Meter betragen, bevorzugt weist die Materialbahn eine Breite größer einem oder zwei Meter auf.

Die Materialbahn ist "endlos". Damit wird bezeichnet, dass die Materialbahn als Rollenmaterial zur Verfügung gestellt werden kann und dabei quasi-endlos Material zur Verfügung gestellt wird. Unter "endlos" kann gefasst werden, dass die Materialbahn für den Schneidevorgang keinen festgelegten Anfang und kein festgelegtes Ende zum Anordnen der Schnitt-Teile aufweist. Eine derartige Bereitstellung des Materials stellt einen wesentlichen Unterschied zu den herkömmlichen Schneideverfahren dar, insbesondere dem zeitgleichen Zuschneiden mehrerer übereinanderliegender Lagen einer Materialbahn einer vordefinierten Länge.

Die Materialbahn kann einlagig sein. Als "einlagig" wird eine Materialbahn bezeichnet, aus der nur ein Schnitt-Teil pro Schneidbewegung des Schneidwerkzeug zugeschnitten wird, also insbesondere keine mehreren Lagen für eine Mehrzahl von Schnitt-Teilen zugeschnitten werden.

In dem Schneideverfahren wird ein "Abschnitt" definiert. Dieser Abschnitt kann von den seitlichen Außengrenzen der Materialbahn begrenzt sein. Dann entspricht die Breite des Abschnitts der Breite der Materialbahn. Zudem ist der Abschnitt rechteckig. Somit wird der Abschnitt durch zwei senkrecht zu den seitlichen Außengrenzen verlaufenden Abschnittsgrenzen begrenzt. Zwischen diesen beiden senkrecht verlaufenden Abschnittsgrenzen kann zumindest ein Teil des Schneidmusters und/oder eines der Schnitt-Teile angeordnet werden. Dieser Abschnitt stellt dabei beispielsweise eine virtuelle Größe dar und muss daher auf der Materialbahn nicht markiert sein.

Der Abschnitt definiert einen sich wiederholenden Bereich auf der Materialbahn mit einer bestimmten Anordnung von Schneidmustern und/oder Schnitt-Teilen. Der Begriff "Wiederholen" bezeichnet erfindungsgemäß, dass die in dem Abschnitt ausgewählte Anordnung von Schneidmustern und/oder Schnitt-Teilen für eine Vielzahl von aufeinanderfolgenden Abschnitten gleich ist und somit in den Folgeabschnitten wiederholt wird.

Wenn die Materialbahn endlos ist und nach dem Schneiden-Schritt weiter transportierbar ist, können Schnitt-Teile und/oder Schneidmuster abschnittsüberlappend angeordnet werden. Somit ist erfindungsgemäß vorgesehen, in einem Abschnitt der Materialbahn ein Schnitt-Teil und/oder ein Schneidmuster nur teilweise anzuordnen.

Das teilweise Anordnen des Schneidmusters bedingt insbesondere, dass zumindest ein Schnitt-Teil des Schneidmusters nicht vollständig, d.h. nicht mit seiner gemäß Schneidmuster definierten Form in dem virtuell definierten sich wiederholenden Abschnitt enthalten sein muss und beispielsweise erst im darauf folgenden Abschnitt - beispielsweise zwischen Schnitt-Teilen eines darauffolgenden Schneidmusters - angeordnet ist. Das heißt auch, dass dieses Schnitt-Teil nicht mit seinem gesamten Umfang innerhalb des Abschnitts angeordnet sein muss.

Das teilweise Anordnen eines Schnitt-Teils bedingt insbesondere, dass das Schnitt-Teil nicht vollumfänglich in dem rechteckigen Abschnitt enthalten ist. Der Abschnitt wiederholt sich mit gleichbleibender (bestimmter) Anordnung der Schnitt-Teile, sodass die Schnitt-Teile und/oder Schneidmuster in den Abschnitten an der gleichen Stelle zugeschnitten werden können.

Das Anordnen mindestens eines Schnitt-Teils und/oder Schneidmusters erfolgt insbesondere nur teilweise, sodass eine Anzahl von Schnitt-Teilen und/oder Schneidmustern einer Menge rationaler Zahlen ohne Ganzzahlen, also einem echten Bruch, entspricht. Beispielsweise werden in einem Abschnitt 4,6 Schnitt-Teile angeordnet, wobei in dem Abschnitt eines der Schnitt-Teile nur zu 60% angeordnet ist und in einem Folge-Abschnitt die restlichen 40% des Schnitt-Teils angeordnet werden.

Zudem kann auch ein Schneidmuster nur zu einer ersten Portion, also teilweise angeordnet sein, sodass die übrige Portion dieses Schneidmusters in einem Folgeabschnitt angeordnet wird. Damit ist eine erste Portion des Schnitt-Teils in einem ersten Abschnitt und die restliche zweite Portion dieses Schnitt-Teils ist in einem Folgeabschnitt angeordnet.

Auf diese Weise kann ein auf eine Länge der Materialbahn optimiertes Verschachtelungs-Verfahren weiter verbessert werden, indem eine vordefinierte Länge einer Materialbahn nicht zum vollständigen Anordnen aller Schnitt-Teile eines Schneidmusters eingehalten wird. Damit können damit einhergehende Sicherheits-Abstände entfallen. Beispielsweise ist es nunmehr unnötig, die für die vordefinierte Länge der Materialbahn einzuhaltenden Sicherheitsabstände an den senkrechten Abschnittsgrenzen zu definieren. Dies ermöglicht eine enorme Materialeinsparung. Durch das Einsparen des Sicherheitsbereichs am Anfang und Ende der Materialbahn kann der Materialaufwand um zirka 0,5 bis 1 Prozent verringert werden. Erfindungsgemäß kann ein auf der Materialbahn anzuordnendes Schneidmuster mit einer entsprechenden Anzahl von Schnitt-Teilen teilweise auch außerhalb eines rechteckigen Abschnitts der Materialbahn angeordnet sein. Die Grenze zwischen den einzelnen Schneidmustern auf der Materialbahn ist nunmehr nicht mehr zwangsweise gerade, die Grenze kann beispielsweise krumm, also ungerade, sein. Die Grenze zwischen den Schneidmustern kann demnach eine Länge aufweisen, die größer ist als die kürzeste Entfernung zwischen den beiden seitlichen Außenrändern der Materialbahn.

In einer bevorzugten Ausgestaltung ist die Materialbahn aus gewebtem Material. Materialbahnen dieser Art bedingen ein präzises Ausschneiden und erschweren dadurch ein dichtverschachteltes Anordnen der Schnitt-Teile und/oder Schneidmuster enorm. Die Schnitt-Teile des Schneidmusters und/oder das Schneidmuster können einen Airbag bilden. Diese Schnitt-Teile sind präzise zuzuschneiden, um Sicherheitsanforderungen und der bestimmungsgemäßen Verwendung zu entsprechen.

In einer bevorzugten Ausgestaltung ist die Materialbahn aus nicht-gewebtem Material, wie Papier, Pappe, Blech, Vliesstoff, Folie. In einer bevorzugten Ausgestaltung kann vor dem Schneiden ein Anordnungsalgorithmus angewendet werden. Dabei werden die Schnitt-Teile in dem sich wiederholenden Abschnitt der endlosen einlagigen Materialbahn folgendermaßen angeordnet: Zunächst wird ein Platzbedarf der Schnitt-Teile in dem Abschnitt der Materialbahn für zumindest eine Anordnungsvariante der Schnitt-Teile in diesem Abschnitt berechnet, wobei in dem Abschnitt der Materialbahn wenigstens ein Schnitt-Teil und/oder ein Schneidmuster nur teilweise enthalten ist.

Das Anordnen der Schnitt-Teile eines oder mehrerer Schneidmuster erfolgt verschachtelt, es wird also eine Verschachtelungs-Methode angewendet. Hierbei wird zumindest ein Schnitt-Teil eines Schneidmusters derart platzsparend neben einem weiteren Schnitt-Teil des Schneidmusters oder eines weiteren Schneidmusters angeordnet, so dass der Materialverschnitt geringer ist, als würden diese Schnitt-Teile in gleicher Ausrichtung und/oder an einem Raster angeordnet auf der Materialbahn angeordnet werden. Die angewendete Verschachtelungs-Methode kann erfindungsgemäß für ein Schnitt-Teil oder für verschiedene Schnitt-Teile eines oder mehrerer Schneidmuster angewendet werden.

In einer Ausführung der Erfindung ist die Anordnung des Schnitt-Teils von der Ausrichtung von Schuss und Kette des gewebten Materials in der Materialbahn abhängig, beispielsweise um Belastungsanforderungen an das Schnitt-Teil oder das Schneidmuster zu erfüllen.

Bei Verwendung nicht-gewebter Materialien ist die Ausrichtung des Schnitt-Teils auf der Materialbahn im Gegensatz zu gewebten Materialien mit höheren Freiheitsgraden möglich, da eine alternative Anordnung (z.B. Drehung des Schnitt-Teils) keine veränderte Materialeigenschaft hervorruft.

Der Begriff "Anordnungsvariante" bezeichnet, dass Schnitt-Teile und/oder Schneidmuster in einer konkreten Anordnung angeordnet werden und für diese konkrete Anordnungsvariante die Berechnung des Platzbedarfs erfolgt.

Als Platzbedarf wird insbesondere der Materialbedarf der Schnitt-Teile und/oder der Schneidmuster auf der Materialbahn für den sich wiederholenden Abschnitt, gegebenenfalls mit zu berücksichtigenden Sicherheitsabständen zu einem Außenbereich der Materialbahn und/oder zu benachbarten Schnitt-Teilen, verstanden.

Nach dem Berechnen-Schritt kann ein Auswählen derjenigen Anordnungsvariante der Schnitt-Teile für diesen Abschnitt auf Basis des Ergebnisses aus dem Berechnen-Schritt erfolgen. Mit dem Auswählen-Schritt erfolgt ein Festlegen bzw. ein Bestimmen einer konkreten Anordnungsvariante, für die der Platzbedarf zuvor berechnet wurde.

Das Auswählen der Anordnungsvariante erfolgt bevorzugt für eine konkrete Anordnungsvariante und wird für aufeinanderfolgende, also sich wiederholende Abschnitte der Materialbahn angewendet. Diese konkret bestimmte Anordnungsvariante kann so für eine große Anzahl von Schnitt-Teilen und/oder Schneidmuster angewendet werden, wobei der Materialverschnitt erheblich reduziert wird. Für das hier vorliegende Verfahren wird bevorzugt eine Anordnungsvariante für ein Schneidmuster für einen sich wiederholenden Abschnitt berechnet und die so bestimmte Anordnungsvariante wird dann für eine Vielzahl von aufeinanderfolgenden Abschnitten wiederholt.

Alternativ oder zusätzlich kann das Auswählen auch für eine definierte Anzahl von aufeinanderfolgenden Abschnitten erfolgen, wobei für jeden der Abfolge von Abschnitten eine andere Anordnungsvariante ausgewählt werden kann. Auf diese Weise kann ein vergleichsweise großflächiges Schneidmuster oder ein großflächiges Schnitt-Teil platzsparend über mehrere Abschnitte angeordnet werden. Für diese Abfolge von Abschnitten ist dann eine effiziente Anordnungsvariante definiert. Dies ist sinnvoll, wenn der vom Schneidwerkzeug zu schneidende Bereich der Materialbahn geringer ist, als die Fläche des zuzuschneidenden Schnitt-Teils oder Schneidmusters.

Alternativ oder zusätzlich kann das Auswählen auch vor jedem Schneiden erfolgen, sozusagen erfolgt dann eine On-the-fly Berechnung von zuzuschneidenden Schnitt-Teilen oder Schneidmustern für jeden vorliegenden Abschnitt. Auf diese Weise können vollkommen verschiedene Schneidmuster sehr flexibel angeordnet werden und können sodann spontan zugeschnitten werden, wobei stets ein Materialverschnitt minimiert wird.

In einer bevorzugten Ausgestaltung erfolgt das Berechnen des Platzbedarfs der Schnitt-Teile in dem Abschnitt der Materialbahn auf Basis einer sortenreinen Anordnung der Schnitt-Teile als Anordnungsvariante. Mit sortenreiner Anordnung wird erfindungsgemäß eine Anordnungsvariante bezeichnet, bei der ausschließlich gleiche, also identisch geformte Schnitt-Teile verschachtelt angeordnet werden. Diese Schnitt-Teile weisen alle die gleiche Form und die gleiche Größe auf.

In einer weiter bevorzugten Ausgestaltung wird das sortenrein anzuordnende Schnitt-Teil angeordnet und für diese Anordnung der Platzbedarf berechnet. In einer ersten Variante ist die zu platzierende Anzahl sortenreiner Schnitt-Teile nur bedingt von der Anzahl zu schneidender Schneidmuster abhängig. Beispielsweise bei einer sehr großen Anzahl von Schneidmustern, beispielsweise bei mehr als 500 Stück, wird die Platzierung derart gewählt, dass auf eine minimale Länge der Materialbahn eine maximale Anzahl von Schnitt-Teilen angeordnet wird. So wird bei einer maximalen Dichte an Schnitt-Teilen pro Materialbahn-Abschnitt ggf. auch eine im Verhältnis zur maximal benötigten Anzahl dieses Schnitt-Teils vergleichsweise geringe Anzahl zu viel geschnittener Schnitt-Teile angeordnet. Diese geringe Anzahl repräsentiert dann aber einen Materialbedarf, der dennoch geringer ist, als bei einer alternativen Anordnung. In einer zweiten Variante wird das sortenrein anzuordnende Schnitt-Teil entsprechend der für das Schneidmuster benötigten Anzahl dieses speziellen Schnitt-Teils angeordnet und dafür der Platzbedarf berechnet.

In einer alternativen Ausgestaltung wird das sortenrein anzuordnende Schnitt-Teil entsprechend der für eine vordefinierte Anzahl von Schneidmustern benötigten Anzahl dieses speziellen Schnitt-Teils angeordnet und für diese Anordnung der Platzbedarf berechnet.

Alternativ wird das sortenrein anzuordnende Schnitt-Teil bei Vorhandensein in mehreren verschiedenen Schneidmustern entsprechend der dafür benötigten Anzahl angeordnet und für diese Anordnung der Platzbedarf berechnet.

Alternativ oder zusätzlich erfolgt eine Anordnung der Schnitt-Teile für eine minimale Länge der Materialbahn (bei einer vorgegebenen Breite der Materialbahn) bei maximaler Anzahl, also einer maximalen Dichte. Hierbei wird auf einen vorgegebenen Unterabschnitt der Material-Bahn eine maximale Anzahl eines Schnitt-Teils angeordnet, sodass eine maximale Dichte für dieses Schnitt-Teil für diesen Unterabschnitt erzielt wird. Für diese Anordnung wird der Platzbedarf ermittelt. In einer nächsten Stufe der Berechnung wird für diesen Abschnitt eine Untermenge der Schnitt-Teile, beispielsweise zwei oder drei Schnitt-Teile des Schneidmusters gewählt und die Berechnung wiederholt. Diese Berechnungsstufe wird gegebenenfalls für verschiedene Untermengen wiederholt und schließlich die Anordnungsvariante mit dem geringsten Platzbedarf ausgewählt. Dabei können diese Unterabschnitte Teil des sich wiederholenden Abschnitts auf der Materialbahn sein. Also erfolgt eine sortenreine Platzierung oder einer größtmöglichen Anzahl von Schnitt-Teilen oder einer Untermenge von Schnitt-Teilen auf einer kleinstmöglichen Fläche. Diese Platzierung kann in einem sich wiederholenden, rechteckigen Abschnitt der Materialbahn erfolgen.

Auf diese Weise können sortenreine Schnitt-Teile sehr flexibel zusammengefasst angeordnet werden, wodurch eine weniger Material benötigende Anordnungsvariante berechnet und ausgewählt werden kann.

In einer bevorzugten Ausgestaltung erfolgt das Berechnen des Platzbedarfs der Schnitt-Teile in dem Abschnitt der Materialbahn auf Basis einer Untermenge von verschiedenen Schnitt-Teilen als Anordnungsvariante. Eine Untermenge bzw. Untergruppe von Schnitt-Teilen ist dabei eine Teilmenge aller, für zumindest ein Schneidmuster benötigten Schnitt-Teile. Die Untermenge umfasst zumindest zwei verschiedene Schnitt-Teile eines und/oder mehrerer Schneidmuster. Auf diese Weise können bestimmte Schnitt-Teile zusammengefasst platziert werden, wodurch möglicherweise eine weniger Material benötigende Anordnungsvariante berechnet und ausgewählt wird.

In einer bevorzugten Ausgestaltung erfolgt die Auswahl der verschiedenen Schnitt-Teile als Untermenge anhand des Flächeninhalts des Schnitt-Teils und/oder anhand der Formgebung des Schnitt- Teils. Somit können gleichgroße und/oder gleichgeformte Schnitt-Teile verschachtelt angeordnet werden. Zusätzlich können verschiedene Schnitt-Teile miteinander kombiniert platziert werden, wenn ihre Kombination eine platzsparende Anordnung ermöglicht. Beispielsweise kann in eine Aussparung bzw. ein Loch eines ersten Schnitt-Teils ein zweites Schnitt-Teil platziert werden.

In einer bevorzugten Ausgestaltung kann das Berechnen des Platzbedarfs auf der Materialbahn auf der Basis aller Schnitt-Teile von zumindest einem Schneidmuster als Anordnungsvariante erfolgen. Auf diese Weise können die Schnitt-Teile eines Schneidmusters in dem Abschnitt platzsparend angeordnet werden.

Das Ergebnis der verschiedenen Anordnungsvarianten und insbesondere das Berechnen des Platzbedarfs in dem Abschnitt der Materialbahn ist entscheidend dafür, welche Anordnungsvariante festgelegt bzw. bestimmt wird. Insbesondere ist das Anordnen in sortenreine Schnitt-Teile und/oder Untermengen von Schnitt-Teilen vorteilhaft, wenn der Materialverschnitt minimiert und damit Materialeinsparungen erzielt werden können.

In einer bevorzugten Ausgestaltung erfolgt die Auswahl der Anordnungsvariante insbesondere sobald ein vordefinierter Schwellwert für einen Materialverschnitt unterschritten ist oder sobald eine Berechnungszeit einen vordefinierten Schwellwert überschritten hat. Dieser Schwellwert kann als Parameter für das Verfahren eingegeben werden und dient insbesondere als Abbruchbedingung für das Anordnen der Schnitt-Teile und/oder Schneidmuster in dem sich wiederholenden Abschnitt der Materialbahn. Der vordefinierte Schwellwert ist beispielsweise ein Optimierungsendwert, sodass das Auswählen einer Anordnungsvariante in endlicher Zeit erfolgt, also der Anordnungs-Algorithmus eine Abbruchbedingung bei Erreichen eines Optimums erhält. Beispielsweise wird der Flächeninhalt aller für eine erste konkrete Anordnungsvariante anzuordnenden Schnitt-Teile berechnet. Dieser erste Wert wird von dem Flächeninhalt des Abschnitts der Materialbahn subtrahiert, um einen ersten Materialverschnitt-Wert zu erhalten. Anschließend wird der Flächeninhalt aller für eine zweite konkrete Anordnungsvariante anzuordnenden Schnitt-Teile berechnet. Dieser zweite Wert wird ebenfalls von dem Flächeninhalt des Abschnitts subtrahiert, um einen zweiten Materialverschnitt-Wert zu erhalten. Anschließend wird der erste Materialverschnitt-Wert von dem zweiten Materialverschnitt-Wert subtrahiert, um einen Materialverschnitt-Differenzwert zu erhalten. Dieser Materialverschnitt-Differenzwert wird mit dem vordefinierten Schwellwert verglichen. Ergibt das Vergleichsergebnis, dass der Materialverschnitt-Differenzwert kleiner oder gleich dem vordefinierten Schwellwert ist, so wird das Verfahren zum Anordnen der Schnitt-Teile und/oder Schneidmuster beendet.

Bevorzugt wird ein Sicherheitsabstands-Wert zwischen den Schnitt-Teilen festgelegt und im Verfahren berücksichtigt. Ein Sicherheitsabstand zwischen den einzelnen Schnitt-Teilen kann sehr gering, beispielsweise kleiner 2 Millimeter sein. Der Sicherheitsabstand kann auch entfallen, also gleich null Millimeter sein, sodass sich angrenzende Schnitt-Teile eine Schnitt-Kante teilen. Im Idealfall wird der beim Schneiden verbrauchte Anteil an Materialbahn für das Schnitt-Teil mit eingerechnet.

In einer bevorzugten Ausgestaltung weist der Abschnitt eine vordefinierte Länge auf, die als Eingangsparameter für das Verfahren festgelegt ist. Somit kann der zum Anordnen der Schnitt-Teile und/oder Schneidmuster zur Verfügung stehende Bereich der Materialbahn eingegrenzt und festgelegt werden.

In einer bevorzugten Ausgestaltung wird eine Anzahl von mindestens einem zuzuschneidenden Schneidmuster vorgegeben. Alternativ oder zusätzlich kann für das Zuschneiden von verschiedenen Schneidmustern eine Anzahl für jedes des verschiedenen Schneidmuster angegeben werden.

Beispielsweise bildet ein erstes Schneidmuster einen ersten Airbag eines ersten Fahrzeugtyps ab. Ein zweites Schneidmuster bildet einen zweiten Airbag des ersten Fahrzeugtyps oder eines zweiten Fahrzeugtyps ab. Als Airbags könnten Fahrer-Beifahrer und/oder Seitenairbags vorgesehen sein. Diese Schneidmuster können erfindungsgemäß einzeln auf der Materialbahn verschachtelt angeordnet werden. Alternativ oder zusätzlich können die Schneidmuster nunmehr auch kombiniert angeordnet werden.

In einer bevorzugten Ausgestaltung wird für die Anordnung der Schnitt-Teile in einem Abschnitt zumindest eines der Schnitt-Teile relativ zu einem anderen Schnitt-Teil verschoben und/oder rotiert. Auf diese Weise ist ein Verschachteln von einzelnen Schnitt-Teilen vereinfacht möglich.

Die Aufgabe wird auch durch ein Computerprogrammprodukt zum Anordnen von Schnitt-Teilen in einem Abschnitt einer endlosen Materialbahn gelöst, wobei Programmteile aus einem Programmspeicher abrufbar sind, die die Durchführung des Verfahrens nach einem der vorhergehenden Art und Weise unterstützen. Die Materialbahn kann einlagig sein. Alternativ können auch mehrere endlose Materialbahnen, beispielsweise zwischen 2 und 10 Materialbahnen, bevorzugt 5 Materialbahnen, übereinander gelegt werden. Dies erhöht die Effizienz des Schneid-Verfahrens.

Die Aufgabe wird auch durch eine Vorrichtung zum Schneiden von Schnitt-Teilen aus einer endlosen einlagigen Materialbahn mit einer Steuerung eingerichtet zum Ausführen eines Verfahrens gemäß einem der obenstehenden Ausführungsbeispiele gelöst. Somit wird eine einlagige, endlose Materialbahn verwendet, um Schnitt-Teile zu schneiden. Das Schneiden erfolgt also nicht auf einzelnen, übereinanderliegenden Materialbahnen, sondern auf einer einlagigen endlosen Materialbahn. Damit kann beispielsweise ein Sicherheitsbereich am Anfang und am Ende eines Abschnitts eingespart werden.

Als Schneidwerkzeug ist insbesondere eine Laser-Schneid-Vorrichtung zum Laserschneiden vorzusehen. Dieses Laserschneiden, auch als Laserstrahlschneiden bezeichnet, ermöglicht das Durchtrennen der Materialbahn mittels kontinuierlicher oder gepulster Laserstrahlung durch Materialablation. Dabei kann nahezu jedes Material, beispielsweise Gewebe, Papier, Karton, Metall, mit dieser Laserstrahlung zugeschnitten werden. Dabei müssen die Parameter der Laserstrahlung, wie Wellenlänge, mittlere Leistung, Pulsenergie und Pulsdauer der Applikation entsprechend angepasst werden. Der mikroskopische Abtragungsmechanismus und die thermischen Effekte werden dabei im Wesentlichen von der Pulsdauer und der Bestrahlungsstärke bestimmt. Das Laserschneiden wird hier eingesetzt, um die Schnitt-Teile der Schneidmuster mit ihren teilweise sehr komplexen Umrissen präzise und schnell zuzuschneiden, typischerweise mit bis zu 30 Meter pro Minute, vereinzelt mit bis zu über 300 Meter pro Minute (5m/sec beim Remoteschneiden). Das Laserschneiden erfolgt berührungslos und nahezu kraftfrei. Als Laser-SchneidVorrichtungen werden zumeist fokussierte Hochleistungslaser, meist der CO₂-Laser als GasLaser oder auch zunehmend Neodym-YAG (Nd-YAG)-Laser als Festkörperlaser sowie gut fokussierbare Faserlaser verwendet.

In vorteilhafter Weise wird gemäß der Erfindung kein geradliniger Abschluss einer Materialbahn zum Anordnen der Schnitt-Teile und/oder des Schneidmusters verwendet, sodass zumindest ein Schnitt-Teil und/oder Schneidmuster nur teilweise in dem sich wiederholenden rechteckigen Abschnitt angeordnet werden kann. Damit können Schneidmuster ineinander verschachtelt angeordnet werden. Ein Schneidmuster kann so in einem ersten Abschnitt begonnen werden und in einem zweiten Abschnitt - der dem ersten Abschnitt folgt - beendet werden. Die Wiederholung des Abschnitts kann sofort erfolgen oder erst nach einer bestimmten Abfolge von Abschnitten alternativer Anordnungsvarianten.

Mit diesem erfindungsgemäßen Verfahren wird nicht nur auf die Materiallänge optimiert, sondem es werden verschiedene Berechnungsverfahren für unterschiedliche Anordnungsvarianten angewendet, um einen minimalen Platzbedarf zu berechnen. Dabei werden die Platzbedürfnisse der einzelnen konkreten Anordnungsvarianten berechnet. Auf der Berechnungsbasis erfolgt sodann ein Auswählen einer konkreten Anordnungsvariante, welche den geringsten Materialverschnitt. Auf diese Weise sind mehrere Prozent an Einsparpotenzial für die Materialbahn möglich.

Erfindungsgemäß erfolgt das Schneiden aus einer endlosen Materialbahn, wobei die Schnitt-Teile der Schneidmuster materialsparend angeordnet werden. Für einen Airbag besteht das komplette Schneidmuster aus mehreren verschiedenen Schnitt-Teilen in stark unterschiedlichen Formen.

Beim Schneiden der verschiedenen Schnitt-Teile aus der rechteckigen endlosen Materialbahnkönnen die einzelnen Abschnitte direkt aneinander platziert werden, sodass nunmehr kein Sicherheitsbereich von mehreren Zentimetern jeweils am Anfang und am Ende der Materialbahn mehr benötigt wird. Damit kann bei einer Materialbahn-Länge von 8 Metern schon 1,25% Material eingespart werden.

Beim Anordnung der Schnitt-Teile zumindest eines Schneidmusters in beispielsweise sortenreine oder Untermengen oder komplette Schneidmuster (also bei Verwendung aller verschiedenen Schnitt-Teile zumindest eines Schneidmusters) können erfindungsgemäß erhebliche Materialeinsparungen erzielt werden, da sich sortenreine Schnitt-Teile oder Untermengen von Schnitt-Teilen manchmal viel platzsparender verschachteln lassen, beispielsweise durch geschickte Rotation oder Verschiebung auf der Materialbahn.

Der Vorteil der Erfindung ist nun zusätzlich auch darin begründet, dass quer zur Förderrichtung der Materialbahn kein geradliniger Abschnitts-Abschluss der verschachtelten Anordnung benötigt wird, sondern auch ein ungerader, also krummer Abschnitt-Abschluss verwendet werden kann. So kann der Anfang einer nachfolgenden Anordnung von Schnitt-Teilen und/oder Schneidmustern in eine Platzierungslücke der vorhergehenden verschachtelten Anordnung geschoben werden. Dieses Ineinander-Verschachteln ist in herkömmlichen Verschachtelungs-Methoden derartiger Schneide-Verfahren nicht möglich, da bei diesen herkömmlichen Methoden stets ein geradliniger Abschnitt-Abschluss vorliegen muss. Nur teilweise platzierte Schnitt-Teile in einem Abschnitt können somit nicht vervollständigt werden, würden also als Materialabfall das Schneideverfahren verteuern. Ebenso ist es erfindungsgemäß möglich, ein Schnitt-Teil oder ein Schneidmuster abschnittsübergreifend anzuordnen, sodass dieses in einem ersten Abschnitt beginnen und in einem zweiten Abschnitt, also der ersten Wiederholung des ersten Abschnitts, abgeschlossen wird.

Auf diese Weise können mehrere Prozent des zu schneidenden Materials eingespart werden. Im Bereich der Airbag-Produktion bedeutet ein Prozent eingespartes Material bei einem Fahrzeug mit einer sehr hohen Stückzahl hohe Einsparungskosten pro Jahr.

Erfindungsgemäß kann diese Technologie bei allen Verfahren eingesetzt werden, in denen von einem Rollenmaterial wiederkehrende Schneidmuster erstellt werden. Die Platzierung erfolgt auf Basis einer Berechnung verschiedener Anordnungsvarianten, wobei neben einer sortenreinen Platzierung auch eine Kombination von Untermengen verschiedener Schnitt-Teile eines Schneidmusters berechnet und berücksichtigt wird.

### KURZE ZUSAMMENFASSUNG DER FIGUREN

Nachfolgend wird anhand von Figuren die Erfindung beziehungsweise weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß beziehungsweise übertrieben vereinfacht dargestellt sein.

Es zeigen:
- Fig.1: ein Ausführungsbeispiel eines Schneidmusters mit Schnitt-Teilen für einen Airbag;
- Fig.2: eine Anordnungsvariante für eine Gruppe aus gleichen Schneidmustern gemäß Fig.1 unter Verwendung aller benötigten Schnitt-Teile;
- Fig.3: eine alternative Anordnungsvariante für eine Gruppe aus gleichen Schneidmustern gemäß Fig.1 unter Verwendung einer Untermenge der benötigten Schnitt-Teile gemäß der Erfindung;
- Fig.4a - 4c: sortenreine Anordnungsvarianten für eine Gruppe aus gleichen Schneidmustern gemäß Fig.1 unter Verwendung eines der Schnitt-Teile gemäß der Erfindung;
- Fig.5: ein zu Fig.1 alternatives Ausführungsbeispiel eines Schneidmusters mit Schnitt-Teilen für ein Airbag in einer ersten Anordnungsvariante;
- Fig.6a - 6d: sortenreine Anordnungsvarianten für eine Gruppe aus gleichen Schneidmustern unter Verwendung eines der Schnitt-Teile gemäß der Erfindung;
- Fig.7: eine alternative Anordnungsvariante für eine Gruppe aus gleichen Schneidmustern unter Verwendung einer Untermenge der benötigten Schnitt-Teile gemäß der Erfindung; und
- Fig.8: ein erfindungsgemäßen Ausführungsbeispiel eines Verfahrensablaufdiagramms eines erfindungsgemäßen Verfahrens.

### FIGURENBESCHREIBUNG

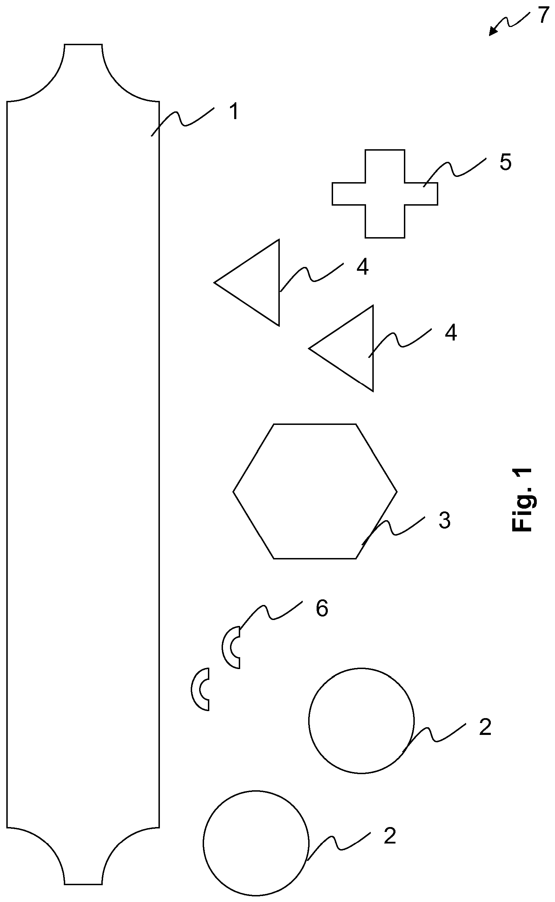

In Fig.1 ist ein Schneidmuster 7 für einen Airbag dargestellt. Das Schneidmuster 7 besteht aus insgesamt neun Schnitt-Teilen 1 bis 6, wobei das Schnitt-Teil 2, das Schnitt-Teil 4 und das Schnitt-Teil 6 im Schneidmuster 7 jeweils zweimal vorhanden ist. Diese neun Schnitt-Teile 1 bis 6 bilden das Schneidmuster 7 beispielsweise für einen Airbag für ein Kraftfahrzeug. Dabei variieren die Formen und Größen der Schnitt-Teile 1 bis 6 sehr stark voneinander.

Um diese neun Schnitt-Teile 1 bis 6 des Schneidmusters 7 platzsparend auf einer Materialbahn 19 anzuordnen und mit einem geringen, möglichst minimalen Materialverschnitt zuzuschneiden, wird das erfindungsgemäße Verfahren angewendet.

Erfindungsgemäß werden dazu verschiedene Anordnungsvarianten des Schneidmusters 7 und/oder Schnitt-Teile 1 bis 6 zumindest einer Gruppe 8, 8' des gleichen Schneidmusters 7 oder auch verschiedener Schneidmuster simuliert also berechnet.

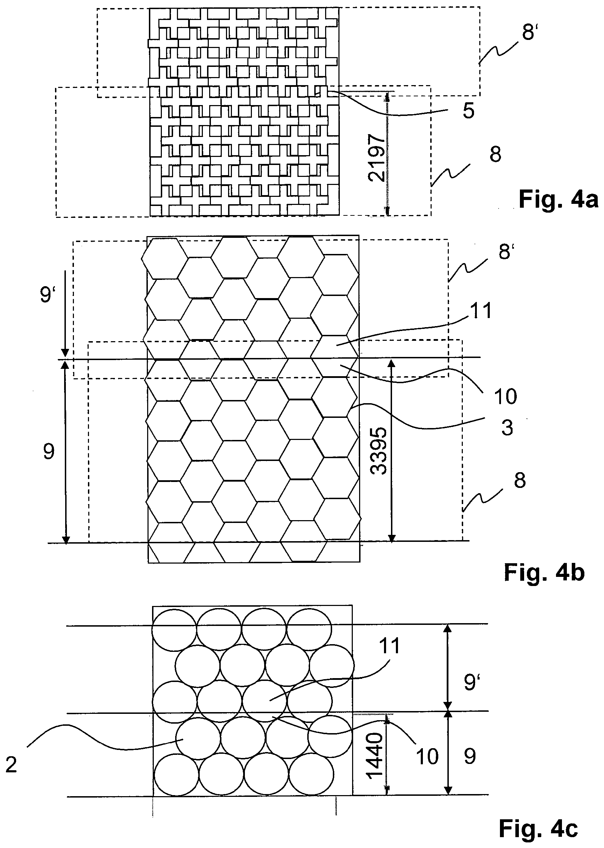

Dabei werden die einzelnen Schnitt-Teile 1 bis 6 des Schneidmusters 7 beispielsweise sortenrein (wie beispielsweise in Fig.4a bis 4c näher gezeigt wird) angeordnet und der Platzbedarf für das jeweilige Schnitt-Teil ermittelt.

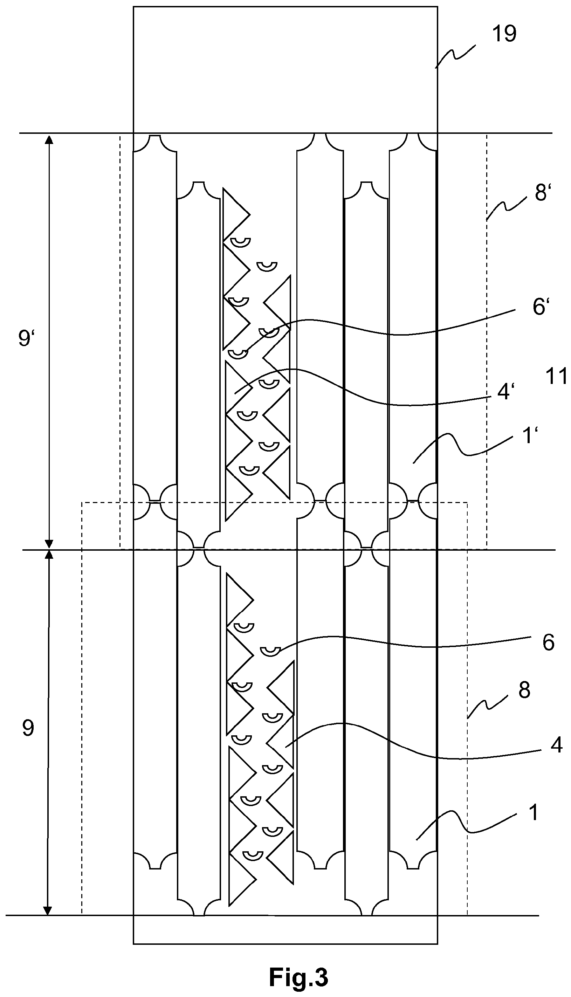

In einer weiteren Anordnungsvariante werden die einzelnen Schnitt-Teile 1 bis 6 des Schneidmusters 7 beispielsweise in Untermengen (wie beispielsweise in Fig.3 näher erläutert wird) angeordnet und der Platzbedarf für das jeweilige Schnitt-Teil 1 bis 6 ermittelt. Die Schnitt-Teile 1 bis 6 pro Untermenge werden entsprechend ihrer Größe oder Form ausgewählt. Dabei sind weder die Anzahl verschiedener Schnitt-Teile 1 bis 6 pro Untermenge noch die Anzahl der Schnitt-Teile 1 bis 6 selbst insgesamt beschränkt.

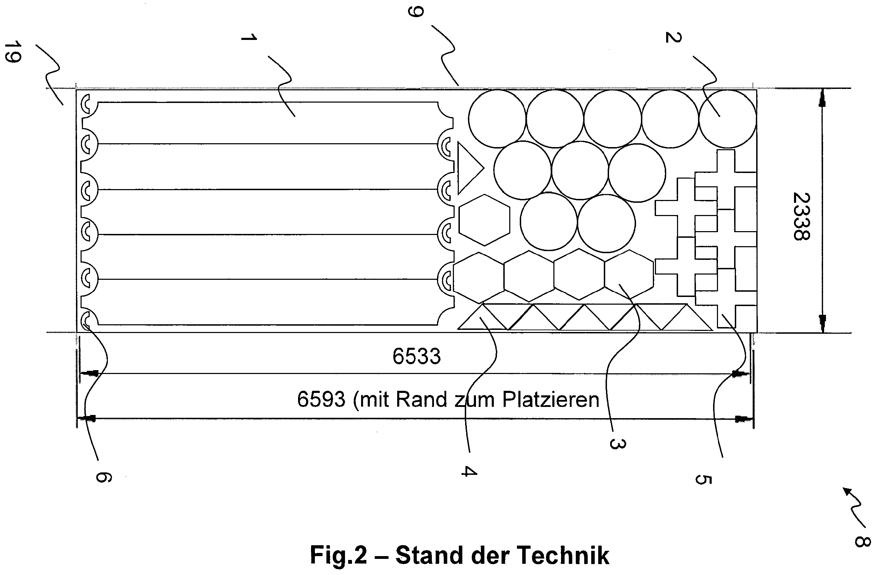

Schließlich können auch alle verschiedenen Schnitt-Teile 1 bis 6 des Schneidmusters 7 (wie beispielsweise in Fig.2 gezeigt) angeordnet werden und der Platzbedarf für das jeweilige Schneidmuster 7 mit allen verschiedenen Schnitt-Teilen 1 bis 6 im Abschnitt 9 oder einer Gruppe 8, 8' von Schneidmustern 7 ermittelt werden.

Für jede Anordnungsvariante werden der Platzbedarf und der Materialverschnitt berechnet und schließlich wird die Anordnungsvariante gewählt, für die der geringste Materialverschnitt berechnet wurde. Dazu können dem Verfahren verschiedene Eingangsparameter, beispielsweise die maximale Anzahl von zuzuschneidenden Schneidmustern oder eine Abschnittslänge oder auch der zu erzielende minimale Materialverschnitt vorgegeben werden.

In Fig.2 ist eine erste konkrete Anordnungsvariante der neun Schnitt-Teile 1 bis 6 des in Fig.1 gezeigten Schneidmusters 7 beispielhaft dargestellt. Dabei ist das gleiche Schneidmuster 7 aus Fig.1 in der Fig.2 insgesamt fünfmal angeordnet, sodass in Fig.2 eine Gruppe 8 aus fünf gleichen Schneidmustern 7 dargestellt ist. Mit der Anordnungsvariante aus Fig.2 können fünf Schneidmuster 7, hier fünf Airbags, aus der Materialbahn 19 geschnitten werden. In Fig.2 sind dazu insgesamt 45 Schnitt-Teile 1 bis 6 dargestellt und platziert.

Alle Schnitt-Teile 1 bis 6 der Gruppe 8 von fünf Schneidmustern 7 sind dabei in einem rechteckigen Abschnitt 9 mit einer Breite von 2335 Millimetern und einer Länge von 6593 Millimetern platziert, wobei in dieser beispielhaften Anordnungsvariante 30 Millimeter Sicherheitsabstand pro Querseite (also Seitenlänge quer zur Materialbahn 19) eingerechnet ist, also ein gesamter Sicherheitsabstand von 60 Millimetern hinzuzurechnen wäre. Diese Anordnungsvariante gemäß Fig.2 kann ebenfalls für ein Schneideverfahren mit mehreren Lagen der Materialbahn 19 und dem herkömmlichen zeitgleichen Zuschneiden mittels eines Schneidwerkzeugs angewendet werden. Diese Anordnungsvariante gemäß Fig.2 benötigt für die Gruppe 8 der fünf Schneidmuster 7 eine Länge der Materialbahn von 6593 Millimeter, sodass für jedes Schneidmuster eine Länge von 1318,6 Millimeter (6593 Millimeter geteilt durch Anzahl 5) verbraucht werden.

Erfindungsgemäß ist nunmehr vorgesehen, diesen Platzbedarf pro Schneidmuster 7 weiter zu reduzieren, um den Materialverschnitt zu minimieren. Dafür wird zunächst für verschiedene andere Anordnungsvarianten der benötigte Platzbedarf errechnet.

In Fig.3 ist beispielsweise eine weitere Anordnungsvariante für das Schneidmuster 7 mit den Schnitt-Teilen 1 bis 6 aus der Fig.1 gezeigt. In Fig.3 werden zwei aufeinanderfolgende Abschnitte 9, 9' auf einer endlosen Materialbahn 19 gezeigt. Diese Abschnitte 9, 9' sind rechteckig und deren Breite ist identisch mit der Breite der Materialbahn 19. Die Materialbahn 19 ist beispielsweise als Rollenmaterial verfügbar.

Im Abschnitt 9 der Fig.3 ist lediglich eine Untermenge aller Schnitt-Teile 1 bis 6 eines Schneidmusters 7 der Fig.1 angeordnet. Hierbei wurden die Schnitt-Teile 1, 4, 6 als Untermenge aller Schnitt-Teile 1 bis 6 des gleichen Schneidmusters 7 platziert. Somit ist das Schneidmuster 7 im Abschnitt 9 nur teilweise enthalten. Diese Untermenge bestehend aus den Schnitt-Teilen 1, 4 und 6 des Schneidmusters 7 gemäß Fig.1 benötigt eine Materialbahn-Länge von 3043 Millimeter. Durch geschicktes Anordnen der Schnitt-Teile 4 und 6 zwischen zwei Schnitt-Teile 1, kann der Platzbedarf verringert werden. Somit ergibt das Berechnen des Platzbedarfs, dass pro Untermenge des Schneidmusters 7 eine Materialbahn-Länge von 609 Millimetern (3043 Millimeter geteilt durch die Anzahl 5) benötigt wird.

Erfindungsgemäß soll eine Vielzahl der Schneidmuster 7 aus der endlosen einlagigen Materialbahn 19 geschnitten werden. Sollen daher mehr als 5 Schneidmuster 7 auf der Materialbahn 19 platziert werden, so werden zur weiteren Platzbedarfs-Reduzierung die großflächigen Schnitt-Teile 1 aus der Gruppe 8 der ersten fünf Schneidmuster 7 in die folgende Gruppe 8' bestehend aus weiteren fünf Schneidmustern 7 verschachtelt. Zudem werden bereits fünf Schnitt-Teile 6' aus der folgenden Gruppe 8' des Schneidmusters 7 in den Abschnitt 9 platziert. Zudem kann aufgrund der endlosen Materialbahn 19 auf den in Fig.2 verwendeten Sicherheitsabstand zwischen den Abschnitten 9 und 9' verzichtet werden. Die Materialbahn 19 kann mehrlagig sein.

In den Fig.4a bis Fig.4c werden nun die übrigen Schnitt-Teile 5, 3 und 2 der Gruppe 8 aus fünf gleichen Schneidmustern 7 gemäß Fig.1 in einer konkreten Anordnungsvariante platziert und deren Platzbedarf ermittelt.

Beispielsweise wird für das Schnitt-Teil 5 eine Anordnungsvariante gewählt, bei der das Schnitt-Teil 5 des Schneidmusters 7 aus der Fig.1 gemäß der Fig.4a sortenrein platziert wird. Dabei werden die einzelnen Schnitt-Teile 5 zunächst derart auf der Materialbahn verschoben und/oder rotiert, dass deren Platzbedarf minimiert ist. Gemäß Fig.4a werden 24 Schnitt-Teile 5 einer ersten Gruppe 8 auf einer Länge von 2197 Millimetern untergebracht. In dieser Anordnungsvariante ergibt das Berechnen des Platzbedarfs, dass pro Schnitt-Teil 5 lediglich eine Länge von 91,54 Millimetern (2197 Millimeter geteilt durch die Anzahl 24) benötigt wird.

Aufgrund der hohen Anzahl von zuzuschneidenden Schneidmustern 7 aus der endlosen einlagigen Materialbahn 19 werden auch gemäß Fig.4a mehr als 5 Schneidmuster 7 auf der Materialbahn 19 platziert werden, sodass die Schnitt-Teile 5 aus der Gruppe 8 der ersten 24 Schneidmuster 7 in die folgende Gruppe 8' bestehend aus weiteren Schneidmustern 7 verschachtelt werden. Zudem kann aufgrund der endlosen einlagigen Materialbahn 19 auf den in Fig.2 verwendeten Sicherheitsabstand zwischen den einzelnen Abschnitten (hier nicht explizit dargestellt) verzichtet werden.

Zudem wird beispielsweise für das Schnitt-Teil 3 ebenfalls eine Anordnungsvariante gewählt, bei der das Schnitt-Teil 3 des Schneidmusters 7 aus der Fig.1 gemäß der Fig.4b sortenrein platziert wird. Dabei werden die einzelnen Schnitt-Teile 3 zunächst derart auf der Materialbahn 19 verschoben und/oder rotiert, dass deren Platzbedarf minimiert ist. Gemäß Fig.4b werden 24 Schnitt-Teile 3 einer ersten Gruppe 8 auf einer Länge von 3395 Millimetern untergebracht. In dieser Anordnungsvariante ergibt das Berechnen des Platzbedarfs, dass pro Schnitt-Teil 3 lediglich eine Länge von 141,46 Millimetern (3395 Millimeter geteilt durch die Anzahl 24) benötigt wird.

Aufgrund der hohen Anzahl von zuzuschneidenden Schneidmustern 7 aus der endlosen einlagigen Materialbahn 19 werden auch gemäß Fig.4b mehr als fünf Schneidmuster 7 auf der Materialbahn 19 platziert werden, sodass die Schnitt-Teile 3 aus der Gruppe 8 der ersten 24 Schneidmuster 7 in die folgende Gruppe 8' bestehend aus weiteren Schneidmustern 7 verschachtelt werden. Die Schnitt-Teile 2 werden abschnittsübergreifend platziert. Somit sind in einem ersten Abschnitt 9 erste Portionen 10 von insgesamt drei Schnitt-Teilen 3 und in einem darauffolgenden zweiten Abschnitt 9' (nicht vollständig abgebildet) sind die korrespondierenden zweiten Portionen 11 der drei Schnitt-Teile 3 angeordnet. Zudem kann aufgrund der endlosen einlagigen Materialbahn 19 auf den in Fig.2 verwendeten Sicherheitsabstand zwischen den einzelnen Abschnitten (hier nicht explizit dargestellt) verzichtet werden.

Zudem wird beispielsweise auch für das Schnitt-Teil 2 eine Anordnungsvariante gewählt, bei der das Schnitt-Teil 2 des Schneidmusters 7 aus der Fig.1 gemäß der Fig.4c sortenrein platziert wird. Dabei werden die einzelnen Schnitt-Teile 2 zunächst derart auf der Materialbahn 19 verschoben und/oder rotiert, dass deren Platzbedarf minimiert ist. Gemäß Fig.4c werden 8 Schnitt-Teile 2 einer ersten Gruppe 8 auf einer Länge von 1440 Millimetern untergebracht. In dieser Anordnungsvariante ergibt das Berechnen des Platzbedarfs, dass pro Schnitt-Teil 2 lediglich eine Länge von 180 Millimetern (1440 Millimeter geteilt durch die Anzahl 8) benötigt wird. Da das Schnitt-Teil 2 im Schneidmuster 7 zweimal benötigt wird, verdoppelt sich der Platzbedarf für das Schnitt-Teil 2 auf 360 Millimeter bei einer sortenreinen Anordnung.

Aufgrund der hohen Anzahl von zuzuschneidenden Schneidmustern 7 aus der endlosen einlagigen Materialbahn 19 werden auch gemäß Fig.4c mehr als fünf Schneidmuster 7 auf der Materialbahn 19 platziert werden, sodass die Schnitt-Teile 2 aus der Gruppe 8 der ersten 8 Schneidmuster 7 in die folgende Gruppe 8' bestehend aus weiteren Schneidmustern 7 verschachtelt werden. Hierbei werden Schnitt-Teile 2 abschnittsübergreifend platziert. Somit sind in einem ersten Abschnitt 9 erste Portionen 10 von insgesamt vier Schnitt-Teilen 2 und in einem darauffolgenden zweiten Abschnitt 9' sind die korrespondierenden zweiten Portionen 11 der vier Schnitt-Teile 2 angeordnet. Auch hier kann aufgrund der endlosen einlagigen Materialbahn 19 auf den in Fig.2 verwendeten Sicherheitsabstand zwischen den einzelnen Abschnitten 9 und 9' verzichtet werden.

Im Berechnen-Schritt wird zum Schneiden des Schneidmusters 7 gemäß Fig.1 aus den Anordnungsvarianten gemäß der Fig.3 bis Fig.4a bis Fig.4c ein Gesamt-Platzbedarf pro Schneidmuster 7 ermittelt. Dabei benötigt ein Schneidmuster 7, wenn deren Schnitt-Teile 1 bis 6 gemäß der Fig.3, 4a bis 4c angeordnet sind eine Gesamtlänge von 1202 Millimetern. Diese Gesamtlänge entspricht der Summe aus dem Platzbedarf der einzelnen Schnitt-Teile, nämlich 609 Millimetern für die Untermenge der Schnitt-Teile 1, 4, 6; 360 Millimeter für das Schnitt-Teil 2 (zweifach); 141,46 Millimeter für das Schnitt-Teil 3 und 91,54 Millimeter für das Schnitt-Teil 5.

Wird also das Schneidmuster 7 aus Fig.1 gemäß der Fig.3, 4a bis 4c angeordnet, so wird eine 8% Materialeinsparung ermöglicht, denn die benötigten 1318,6 Millimeter pro Schneidmuster 7 gemäß der Anordnungsvariante aus Fig.2 reduziert sich auf 1202 Millimeter pro Schneidmuster 7 gemäß der Anordnungsvariante aus den Fig.3, 4a bis 4c.

Die Schneide-Zeit für eines der Schneidmuster 7 bestehend aus den neun Schnitt-Teilen 1 bis 6 beträgt dabei 7,2 Sekunden. Diese Schneide-Zeit setzt sich wie folgt zusammen:
Die Anordnungsvariante der Untermenge des Schneidmusters 7 im Abschnitt 9 der Materialbahn 19 gemäß Fig.3 wird in 18 Sekunden geschnitten, da hier insgesamt 10,3 Meter Materialbahn pro Minute geschnitten werden können. Somit wird pro Untermenge der Schnitt-Teile 1, 4 (zweifach) und 6 (zweifach) eine Schneide-Zeit von 3,6 Sekunden benötigt (18 Sekunden geteilt durch Anzahl 5).

Die Anordnungsvariante des Schnitt-Teils 5 des Schneidmusters 7 im Abschnitt 9 der Materialbahn 19 gemäß Fig.4a wird in 18 Sekunden geschnitten, da hier insgesamt 7,3 Meter Materialbahn pro Minute geschnitten werden können. Somit wird pro Schnitt-Teil 5 eine Schneide-Zeit von 0,75 Sekunden benötigt (18 Sekunden geteilt durch Anzahl 24).

Die Anordnungsvariante des Schnitt-Teils 3 des Schneidmusters 7 im Abschnitt 9 der Materialbahn 19 gemäß Fig.4b wird in 25 Sekunden geschnitten, da hier insgesamt 8,1 Meter Materialbahn pro Minute geschnitten werden können. Somit wird pro Schnitt-Teil 3 eine Schneide-Zeit von 1,04 Sekunden benötigt (25 Sekunden geteilt durch Anzahl 24).

Die Anordnungsvariante des Schnitt-Teils 2 des Schneidmusters 7 im Abschnitt 9 der Materialbahn 19 gemäß Fig.4c wird in 6,2 Sekunden geschnitten, da hier insgesamt 14 Meter Materialbahn pro Minute geschnitten werden können. Somit wird pro Schnitt-Teil 2 eine Schneide-Zeit von 0,8 Sekunden benötigt (6,2 Sekunden geteilt durch Anzahl 8). Da zwei Schnitt-Teile 2 benötigt werden im Schneidmuster 7 gemäß Fig.1, verdoppelt sich die Schneide-Zeit für das Schnitt-Teil 2 auf 1,6 Sekunden.

Schließlich wird eine konkrete Anordnungsvariante für das Schneidmuster 7 basierend auf einer zuvor ermittelten Berechnung ausgewählt und damit festgelegt. Diese Anordnungsvariante wird dann für eine hohe Anzahl der zuzuschneidenden Schneidmuster 7 verwendet und dem Schneide-Verfahren zugrunde gelegt. Die Schnitt-Teile 1 bis 6 sind dabei in dem rechteckigen, sich wiederholenden Abschnitt 9 der endlosen einlagigen Materialbahn 19 angeordnet, wobei im Abschnitt 9 zumindest ein Schnitt-Teil 1 bis 6 oder zumindest ein Schneidmuster 7 (nur) teilweise enthalten ist.

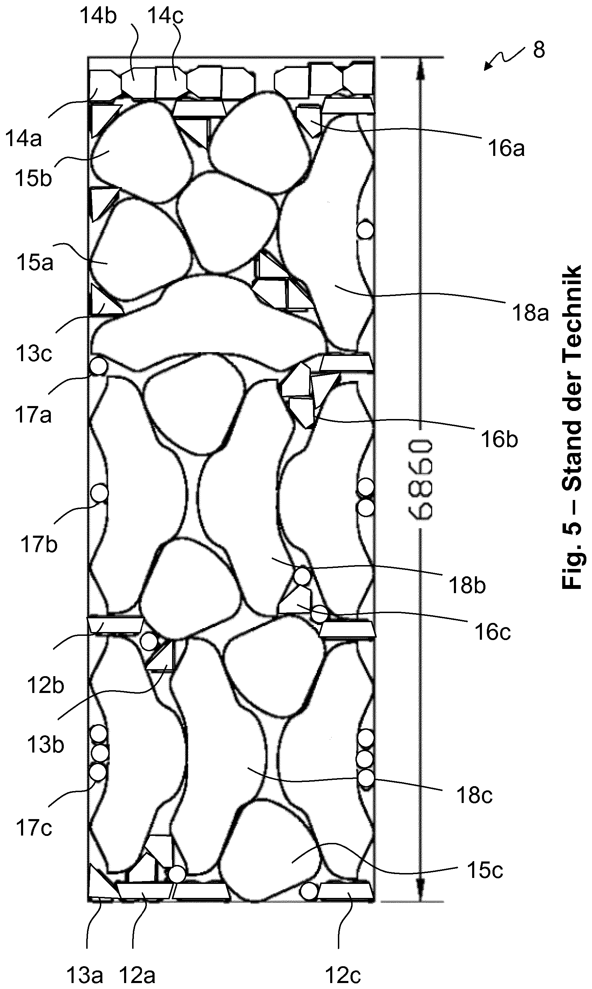

In den Fig.5 bis Fig.7 sind Anordnungsvarianten für ein zur Fig.1 alternatives Schneidmuster dargestellt. Das in Fig.5 gezeigte Schneidmuster wird aus sieben verschiedenen Schnitt-Teilen 12 bis 18 gebildet.

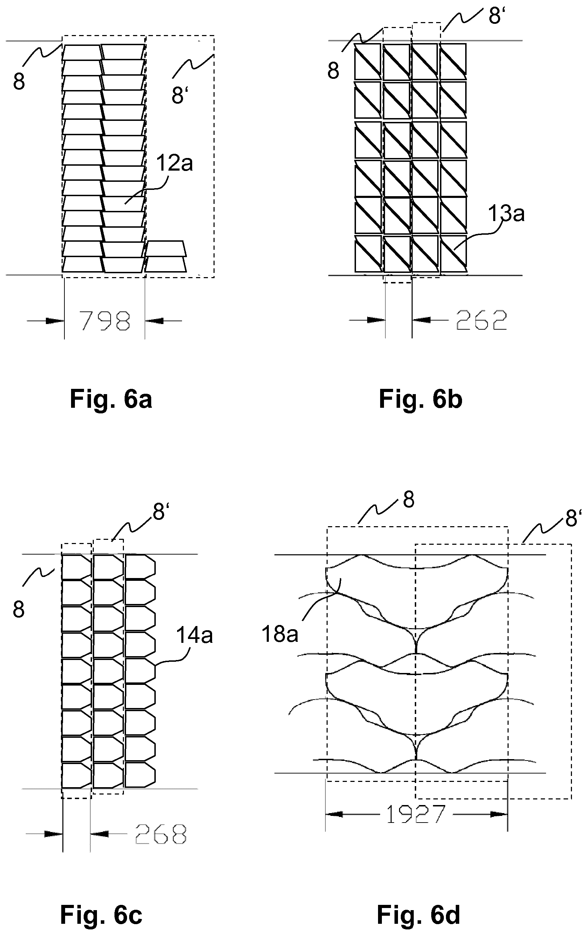

Dabei werden die einzelnen Schnitt-Teile 12 bis 18 des Schneidmusters aus Fig.5 beispielsweise sortenrein (wie beispielsweise in Fig.6a bis 6d näher gezeigt wird) angeordnet und der Platzbedarf für das jeweilige Schnitt-Teil einzeln ermittelt.

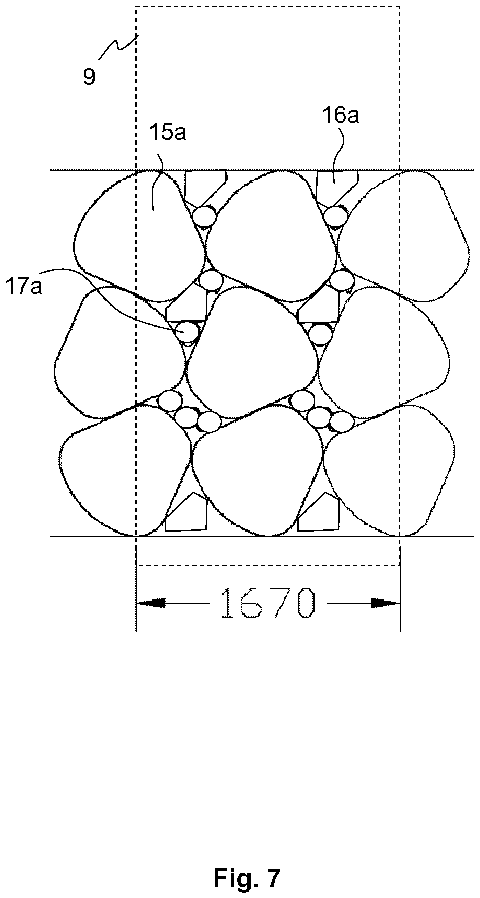

In einer weiteren Anordnungsvariante werden die einzelnen Schnitt-Teile 12 bis 18 des Schneidmusters beispielsweise in Untermengen (wie beispielsweise in Fig.7 näher erläutert wird) angeordnet und der Platzbedarf für die jeweilige Untermenge an Schnitt-Teilen 12 bis 18 ermittelt. Die Schnitt-Teile 12 bis 18 pro Untermenge werden entsprechend ihrer Größe oder Form ausgewählt. Dabei sind weder die Anzahl verschiedener Schnitt-Teile 12 bis 18 pro Untermenge noch die Anzahl der Schnitt-Teile 12 bis 18 selbst insgesamt beschränkt.

Schließlich können auch alle verschiedenen Schnitt-Teile 12 bis 18 des Schneidmusters (wie beispielsweise in Fig.5 gezeigt) angeordnet werden und der Platzbedarf für das gesamte Schneidmuster mit allen Schnitt-Teilen 12 bis 18 oder einer Gruppe 8 aus gleichen Schneidmustern ermittelt werden.

Für jede Anordnungsvariante werden somit der Platzbedarf und der Materialverschnitt berechnet und dann wird schließlich diejenige Anordnungsvariante gewählt, für die der geringste Materialverschnitt berechnet wurde. Dazu können dem Verfahren verschiedene Eingangsparameter, beispielsweise die maximale Anzahl von zuzuschneidenden Schneidmustern oder eine Abschnittslänge oder auch der zu erzielende minimale Materialverschnitt vorgegeben werden.

In Fig.5 ist eine konventionelle Anordnungsvariante der sieben verschiedenen Schnitt-Teile 12 bis 18 für eine Gruppe 8 aus acht gleichen Schneidmustern beispielhaft dargestellt. Mit der Anordnungsvariante aus Fig.5 können acht Schneidmuster, hier acht Airbags, aus der Materialbahn 19 geschnitten werden. In Fig.5 sind dazu insgesamt 56 Schnitt-Teile 12 bis 18 dargestellt und platziert. Zur Orientierung sind jeweils drei der verschiedenen Schnitt-Teile 12 bis 18 mit den Buchstaben a bis c referenziert.

Alle Schnitt-Teile 12 bis 18 der Gruppe 8 von Schneidmustern sind dabei auf einer Länge von 6800 Millimetern platziert, wobei in dieser beispielhaften Anordnungsvariante wiederum 30 Millimeter Sicherheitsabstand pro Querseite (also Seitenlänge quer zur Materialbahn 19) eingerechnet werden muss, also ein gesamter Sicherheitsabstand von 60 Millimetern eingerechnet ist. Diese Anordnungsvariante gemäß Fig.5 kann ebenfalls für ein Schneideverfahren mit mehreren Lagen der Materialbahn 19 und dem herkömmlichen zeitgleichen Zuschneiden mittels eines Schneidwerkzeugs angewendet werden. Diese Anordnungsvariante gemäß Fig.5 benötigt für die Gruppe 8 der acht Schneidmuster eine Länge der Materialbahn von 6860 Millimeter, sodass für jedes Schneidmuster eine Länge von 857,5 Millimeter (6860 Millimeter geteilt durch Anzahl 8) verbraucht werden.

Erfindungsgemäß ist nunmehr vorgesehen, diesen Platzbedarf pro Schneidmuster weiter zu reduzieren, um den Materialverschnitt zu minimieren. Dafür wird für verschiedene andere Anordnungsvarianten der benötigte Platzbedarf errechnet.

In den Fig.6a bis Fig.6d werden die Schnitt-Teile 12, 13, 14 und 18 der Gruppe 8 aus gleichen Schneidmustern sortenrein platziert.

Beispielsweise wird für das Schnitt-Teil 12 eine Anordnungsvariante gewählt, bei der das Schnitt-Teil 12 gemäß der Fig.6a sortenrein platziert wird. Dabei werden die einzelnen Schnitt-Teile 12 zunächst derart auf der Materialbahn verschoben und/oder rotiert, dass deren Platzbedarf minimiert ist. Gemäß Fig.6a werden 28 Schnitt-Teile 12 einer Gruppe aus gleichen Schneidmustern auf einer Länge von 798 Millimetern untergebracht. In dieser Anordnungsvariante ergibt das Berechnen des Platzbedarfs, dass pro Schnitt-Teil 12 lediglich eine Länge von 29 Millimetern (798 Millimeter geteilt durch die Anzahl 28) benötigt wird.

Aufgrund der hohen Anzahl von zuzuschneidenden Schneidmustern aus der endlosen Materialbahn 19 werden auch gemäß Fig.6a viel mehr Schneidmuster auf der Materialbahn 19 platziert werden, sodass die 28 Schnitt-Teile 12 aus der Gruppe 8 der Schneidmuster direkt neben die folgende Gruppe 8' bestehend aus weiteren Schneidmustern bzw. weiteren Schnitt-Teilen 12, verschachtelt werden. Zudem kann aufgrund der endlosen Materialbahn 19 auf den in Fig.5 verwendeten Sicherheitsabstand zwischen den einzelnen Abschnitten (hier nicht explizit dargestellt) verzichtet werden.

Dabei kann vorgesehen sein, dass ein Schnitt-Teil auf maximale Dichte bei minimalem Längenbedarf der Materialbahn 19 in einem sich wiederholenden Abschnitt 9 platziert wird. Die Anzahl, der in diesem Abschnitt 9 platzierten Schnitt-Teile kann dabei geringer sein als die maximale, für eine vorgegebene Anzahl von Schneidmustern 7 zu platzierende Anzahl dieses Schnitt-Teils insgesamt.

Zudem wird beispielsweise für das Schnitt-Teil 13 ebenfalls eine Anordnungsvariante gewählt, bei der das Schnitt-Teil 13 gemäß der Fig.6b sortenrein platziert wird. Dabei werden die einzelnen Schnitt-Teile 13 zunächst derart auf der Materialbahn 19 verschoben und/oder rotiert, dass deren Platzbedarf minimiert ist. In Fig.6b ist dabei ein Schnitt-Teil 13 um 180° zum benachbarten Schnitt-Teil 13 dieser Gruppe 8 gedreht. Gemäß Fig.6b werden 12 Schnitt-Teile 13 einer Gruppe 8 auf einer Länge von 262 Millimetern untergebracht. In dieser Anordnungsvariante ergibt das Berechnen des Platzbedarfs, dass pro Schnitt-Teil 13 lediglich eine Länge von 22 Millimetern (262 Millimeter geteilt durch die Anzahl 12) benötigt wird.

Aufgrund der hohen Anzahl von zuzuschneidenden Schneidmustern aus der endlosen einlagigen Materialbahn 19 werden auch gemäß Fig.6b viel mehr Schneidmuster auf der Materialbahn 19 platziert werden, sodass die Schnitt-Teile 13 aus der Gruppe 8 der ersten 12 Schneidmuster direkt neben die folgende Gruppe 8' bestehend aus weiteren Schneidmustern bzw. Schnitt-Teilen 13 verschachtelt werden. Zudem kann aufgrund der endlosen einlagigen Materialbahn 19 auf den in Fig.5 verwendeten Sicherheitsabstand zwischen den einzelnen Abschnitten (hier nicht explizit dargestellt) verzichtet werden.

Zudem wird beispielsweise auch für das Schnitt-Teil 14 eine Anordnungsvariante gewählt, bei der das Schnitt-Teil 14 gemäß der Fig.6c sortenrein platziert wird. Dabei werden die einzelnen Schnitt-Teile 14 zunächst derart auf der Materialbahn 19 verschoben und/oder rotiert, dass deren Platzbedarf minimiert ist. Gemäß Fig.6c werden 9 Schnitt-Teile 14 einer Gruppe 8 auf einer Länge von 268 Millimetern untergebracht. In dieser Anordnungsvariante ergibt das Berechnen des Platzbedarfs, dass pro Schnitt-Teil 14 lediglich eine Länge von 30 Millimetern (268 Millimeter geteilt durch die Anzahl 9) benötigt wird.

Aufgrund der hohen Anzahl von zuzuschneidenden Schneidmustern aus der endlosen einlagigen Materialbahn 19 werden auch gemäß Fig.6c viel mehr Schneidmuster auf der Materialbahn 19 platziert werden, sodass die Schnitt-Teile 14 aus der Gruppe 8 der ersten 9 Schneidmuster direkt neben die folgende Gruppe 8' bestehend aus weiteren Schneidmustern bzw. Schnitt-Teilen 13 verschachtelt werden. Zudem kann aufgrund der endlosen einlagigen Materialbahn 19 auf den in Fig.5 verwendeten Sicherheitsabstand zwischen den einzelnen Abschnitten (hier nicht explizit dargestellt) verzichtet werden.

Zudem wird beispielsweise auch für das Schnitt-Teil 18 eine Anordnungsvariante gewählt, bei der das Schnitt-Teil 18 gemäß der Fig.6d sortenrein platziert wird. Dabei werden die einzelnen Schnitt-Teile 18 zunächst derart auf der Materialbahn 19 verschoben und/oder rotiert, dass deren Platzbedarf minimiert ist. Gemäß Fig.6d werden 4 Schnitt-Teile 18 einer Gruppe 8 auf einer Länge von 1927 Millimetern untergebracht. In dieser Anordnungsvariante ergibt das Berechnen des Platzbedarfs, dass pro Schnitt-Teil 18 lediglich eine Länge von 482 Millimetern (1927 Millimeter geteilt durch die Anzahl 4) benötigt wird.

Aufgrund der hohen Anzahl von zuzuschneidenden Schneidmustern aus der endlosen einlagigen Materialbahn 19 werden auch gemäß Fig.6d viel mehr Schneidmuster auf der Materialbahn 19 platziert werden, sodass die Schnitt-Teile 18 aus der Gruppe 8 der ersten 4 Schneidmuster in eine folgende Gruppe 8' bestehend aus weiteren Schneidmustern bzw. Schnitt-Teilen 18 verschachtelt werden. Zudem kann aufgrund der endlosen einlagigen Materialbahn 19 auf den in Fig.5 verwendeten Sicherheitsabstand zwischen den einzelnen Abschnitten (hier nicht explizit dargestellt) verzichtet werden.

In Fig.7 ist eine weitere Anordnungsvariante für das Schneidmuster mit lediglich einer Untermenge der verschiedenen Schnitt-Teile 12 bis 18 des Schneidmusters gezeigt. In Fig.7 ist lediglich eine Untermenge bestehend aus den Schnitt-Teilen 15, 16 und 17 aus allen verschiedenen Schnitt-Teilen 12 bis 18 des gleichen Schneidmusters platziert. Für sechs dieser Untermenge bestehend aus den Schnitt-Teilen 15, 16 und 17 benötigt eine Materialbahn-Länge von 1670 Millimeter. Somit ergibt das Berechnen des Platzbedarfs, dass pro Untermenge des Schneidmusters eine Materialbahn-Länge von 278 Millimetern (1670 Millimeter geteilt durch die Anzahl 6) benötigt wird.

Erfindungsgemäß soll eine Vielzahl der Schneidmuster aus der endlosen einlagigen Materialbahn 19 geschnitten werden. Sollen daher mehr als 5 Schneidmuster 7 auf der Materialbahn 19 platziert werden, so werden zur weiteren Platzbedarfs-Reduzierung die großflächigen Schnitt-Teile 1 aus der Gruppe 8 der ersten sechs Schneidmuster in die folgende Gruppe 8' bestehend aus weiteren fünf Schneidmustern 7 verschachtelt. Zudem kann aufgrund der endlosen einlagigen Materialbahn 19 auf den in Fig.5 verwendeten Sicherheitsabstand zwischen den Abschnitten 9 und 9' verzichtet werden.

Im Berechnen-Schritt wird zur Reduzierung des Platzbedarfs zum Schneiden des Schneidmusters aus den Anordnungsvarianten gemäß der Fig.6a-6d bis Fig.7 ein Gesamt-Platzbedarf pro Schneidmuster ermittelt. Dabei benötigt ein Schneidmuster, wenn deren Schnitt-Teile 12 bis 18 gemäß der Fig.6a-6d bis Fig.7 angeordnet sind eine Gesamtlänge von 841 Millimetern. Diese Gesamtlänge entspricht der Summe aus dem Platzbedarf der einzelnen Schnitt-Teile, nämlich 278 Millimeter für die Untermenge der Schnitt-Teile 15, 16, 17; 29 Millimeter für das Schnitt-Teil 12; 22 Millimeter für das Schnitt-Teil 13; 30 Millimeter für das Schnitt-Teil 14; und 482 Millimeter für das Schnitt-Teil 18.

Wird also das Schneidmuster anstelle der Anordnung gemäß Fig.5 mit der Anordnung gemäß der Fig.6a-6d bis Fig.7 angeordnet, so wird eine 2% Materialeinsparung ermöglicht (857,5 Millimeter pro Schneidmuster gemäß Anordnungsvariante aus Fig.5 gegenüber 841 Millimeter pro Schneidmuster gemäß Anordnungsvariante aus den Fig.6a bis 6d und Fig.7).

Die Schneide-Zeit für eines der Schneidmuster beträgt dabei 6,6 Sekunden bei zwei Laserschneid-Scannern oder 13 Sekunden bei einem Laserschneid-Scanner.

Schließlich wird eine konkrete Anordnungsvariante für das Schneidmuster basierend auf einer zuvor ermittelten Berechnung ausgewählt und damit festgelegt. Diese Anordnungsvariante wird dann für eine hohe Anzahl der zuzuschneidenden Schneidmuster verwendet und dem Schneide-Verfahren zugrunde gelegt. Die Schnitt-Teile 12 bis 18 sind dabei in dem rechteckigen, sich wiederholenden Abschnitt 9 der endlosen einlagigen Materialbahn 19 angeordnet, wobei im Abschnitt 9 zumindest ein Schnitt-Teil 12 bis 18 oder zumindest ein Schneidmuster (nur) teilweise enthalten ist.

Um eine Materialreduzierung zu erreichen wird daher das in Fig.5 dargestellte Schneidmuster entsprechend dem erfindungsgemäßen Verfahren optimiert, um eine materialsparende Anordnungsvariante zu ermitteln.

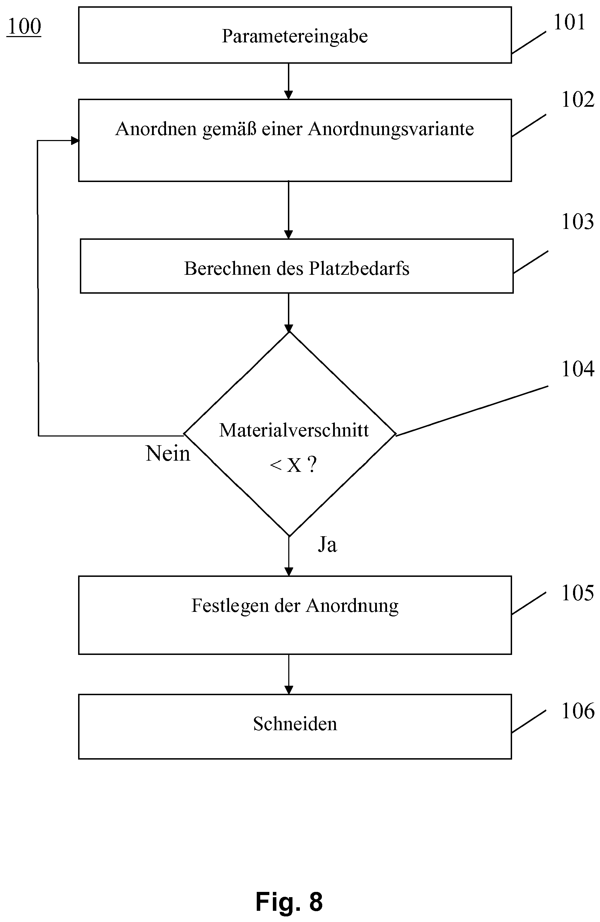

In Fig.8 ist ein erfindungsgemäßes Ausführungsbeispiel eines Verfahrensablaufdiagramms für ein erfindungsgemäßes Verfahren 100 dargestellt. Dabei erfolgt im optionalen Verfahrensschritt 101 eine Parameter-Eingabe für das Verfahren, beispielsweise wird die Länge des Abschnitts 9 oder die Anzahl der zu schneidenden Schneidmuster angegeben. Insbesondere kann angegeben werden wie viele verschiedene Schneidmuster, Schnitt-Teile pro Schneidmuster etc. platziert werden sollen. Im Schritt 102 erfolgt ein Platzieren von Schnitt-Teilen zumindest eines Schneidmusters auf der Materialbahn. Im Schritt 103 erfolgt dann ein Berechnen des Platzbedarfs für die im Schritt 102 platzierte Anordnungsvariante. Ist ein Platzbedarf für eine Anordnungsvariante berechnet, so wird dieser errechnete Platzbedarf bzw. ein daraus resultierender Materialverschnitt mit einem Schwellwert X im darauffolgenden optionalen Schritt 104 verglichen. Ist der Materialverschnitt größer als der angegebene Schwellwert X (Nein-Fall des Vergleichen-Schritts 104), so wird eine alternative Anordnungsvariante im Schritt 102 platziert und für diese der Platzbedarf im Schritt 103 erneut berechnet und erneut der Vergleichen-Schritt 104 durchgeführt. Sobald der Materialverschnitt unterhalb des Schwellwerts X liegt (Ja-Fall im Vergleichen-Schritt 104), erfolgt das Festlegen der Anordnung im Schritt 105. Diese festgelegte Anordnung kann sodann in einem Programmspeicher abgelegt werden. Im Schritt 106 wird die Materialbahn anhand der festgelegten Anordnungsvariante geschnitten.

Im Rahmen der Erfindung können alle beschriebenen und/oder gezeichneten und/oder beanspruchten Elemente beliebig miteinander kombiniert werden.

Insbesondere wird für mehrere verschiedene Anordnungsvarianten der minimale Platzbedarf berechnet. Dabei wird beispielsweise zunächst ein Schnitt-Teil eines Schneidmusters auf der Materialbahn platziert. Diese Anordnung erfolgt nach dem Prinzip der maximalen Dichte auf minimaler Länge. So kann errechnet werden, wieviel Platzbedarf eine sortenreine Anordnung für ein Schnitt-Teil benötigt. Diese Anordnung kann zunächst für jedes Schnitt-Teil getrennt erfolgen, um den minimalen Platzbedarf bei maximaler Anzahl sortenreiner Platzierung zu berech-nen.

In einer nächsten Stufe der Erfindung können nun erste Schnitt-Teile des Schneidmusters mit zweiten Schnitt-Teilen des Schneidmusters kombiniert werden. Nun wird für diese Kombination - vorhergehend als Untermenge bezeichnet - der minimale Platzbedarf bei maximaler Anzahl der Kombination berechnet. Die Anzahl von unterschiedlichen Schnitt-Teilen in einer Kombination kann für unterschiedliche Berechnungen variiert werden, sodass zunächst für zwei Schnitt-Teile eines Schneidmusters danach für drei oder mehr Schnitt-Teile eines Schneidmusters der minimale Platzbedarf pro Länge Materialbahn berechnet wird.

Auf diese Weise kann durch verschiedene Kombinationen in Verbindung mit einer sortenreinen Platzierung eine Anordnungsvariante gefunden werden, die einen minimalen Materialverschnitt aufweist. Die Anordnungsvariante umfasst dabei zumindest einen rechteckigen sich wiederholenden Abschnitt, in dem ein Schnitt-Teil nur teilweise enthalten ist.

Es wird nicht unbedingt nur eine benötigte Anzahl von Schnitt-Teilen angeordnet. Vielmehr wird durch eine mehrfache Wiederholung des Abschnitts die benötigte Anzahl der Schnitt-Teile erreicht. Werden nunmehr Kombinationen (Untermengen) berechnet, so wird durch wiederholen dieser Kombination schließlich die gewünschte Anzahl von Schnitt-Teilen erhalten.

### BEZUGSZEICHENLISTE

| | | | |
|---|---|---|---|
| 1-6 | Schnitt-Teile 1 bis 6 | 20 | Schwellwert für Materialver-schnitt |
| 7 | Schneidmuster | | |
| 8, 8' | Gruppe von gleichen Schnitt-Teilen | 101-106 | Verfahrensschritte |
| 9, 9' | sich wiederholender Abschnitt | | |
| 10 | erste Portion des Schnitt-Teils | | |
| 11 | zweite Portion des Schnitt-Teils | | |
| 12a-c | Schnitt-Teil 1 | | |
| 13a-c | Schnitt-Teil 2 | | |
| 14a-c | Schnitt-Teil 3 | | |
| 15a-c | Schnitt-Teil 4 | | |
| 16a-c | Schnitt-Teil 5 | | |
| 17a-c | Schnitt-Teil 6 | | |
| 18a-c | Schnitt-Teil 7 | | |
| 19 | Materialbahn | | |

## Patentansprüche

1. Verfahren zum Schneiden von Schnitt-Teilen (1, 2, 3, 4, 5, 6; 12, 13, 14, 15, 16, 17, 18), wobei die Schnitt-Teile (1, 2, 3, 4, 5, 6; 12, 13, 14, 15, 16, 17, 18) ein Schneidmuster (7) bilden, mit den Verfahrensschritten:
- Schneiden (106) der Schnitt-Teile (1, 2, 3, 4, 5, 6; 12, 13, 14, 15, 16, 17, 18), wobei die Schnitt-Teile (1, 2, 3, 4, 5, 6; 12, 13, 14, 15, 16, 17, 18) in einem rechteckigen, sich wiederholenden Abschnitt (9, 9') einer endlosen Materialbahn (19) angeordnet sind, wobei zumindest eines der Schnitt-Teile (1, 2, 3, 4, 5, 6; 12, 13, 14, 15, 16, 17, 18) oder zumindest ein Schneidmuster (7) nur teilweise im sich wiederholenden Abschnitt (9, 9') enthalten ist,
**gekennzeichnet dadurch, dass**
eine vordefinierte Länge der Materialbahn (19) nicht zum vollständigen Anordnen aller Schnitt-Teile (1, 2, 3, 4, 5, 6; 12, 13, 14, 15, 16, 17, 18) eines Schneidmusters (7) eingehalten wird.

2. Verfahren nach Anspruch 1, wobei die Materialbahn (19) gewebt ist und die Schnitt-Teile (1, 2, 3, 4, 5, 6; 12, 13, 14, 15, 16, 17, 18) des Schneidmusters (7) einen Airbag bilden oder die Materialbahn eine gewebte technische Textilie ist.

3. Verfahren nach Anspruch 1, wobei die Materialbahn (19) aus einem der folgenden Materialien ist:
- gewebte technische Textilie;
- Blech;
- Folie;
- Papier oder Pappe; und/oder
- Vliesstoff.

4. Verfahren nach einem der vorhergehenden Ansprüche, wobei vor dem Schneiden-Schritt die Schnitt-Teile (1, 2, 3, 4, 5, 6; 12, 13, 14, 15, 16, 17, 18) im sich wiederholenden Abschnitt (9, 9') der endlosen Materialbahn (19) angeordnet werden, wobei das Anordnen die folgenden Schritte umfasst:
- Berechnen (103) eines Platzbedarfs der Schnitt-Teile (1, 2, 3, 4, 5, 6; 12, 13, 14, 15, 16, 17, 18) im Abschnitt (9, 9') der Materialbahn (19) für zumindest eine Anordnungsvariante der Schnitt-Teile (1, 2, 3, 4, 5, 6; 12, 13, 14, 15, 16, 17, 18) in diesem Abschnitt (9, 9'), wobei mindestens eines der Schnitt-Teile (1, 2, 3, 4, 5, 6; 12, 13, 14, 15, 16, 17, 18) oder ein Schneidmuster (7) teilweise (10, 11) im Abschnitt (9, 9') enthalten ist; und
- Auswählen (105) der Anordnungsvariante der Schnitt-Teile (1, 2, 3, 4, 5, 6; 12, 13, 14, 15, 16, 17, 18) für diesen Abschnitt (9, 9') auf Basis des Ergebnisses aus dem Berechnen-Schritt.

5. Verfahren nach Anspruch 4, wobei die ausgewählte Anordnungsvariante auf alle sich wiederholenden Abschnitte (9, 9') angewendet wird.

6. Verfahren nach einem der Ansprüche 4 oder 5, wobei das Berechnen (103) des Platzbedarfs der Schnitt-Teile (1, 2, 3, 4, 5, 6; 12, 13, 14, 15, 16, 17, 18) im Abschnitt (9, 9') der Materialbahn (19) auf Basis einer sortenreinen Anordnung der Schnitt-Teile (1, 2, 3, 4, 5, 6; 12, 13, 14, 15, 16, 17, 18) in dem Abschnitt (9, 9') als Anordnungsvariante erfolgt.

7. Verfahren nach einem der Ansprüche 4 bis 6, wobei das Berechnen (103) des Platzbedarfs der Schnitt-Teile (1, 2, 3, 4, 5, 6; 12, 13, 14, 15, 16, 17, 18) im Abschnitt (9, 9') der Materialbahn (19) auf Basis einer Untermenge von verschiedenen Schnitt-Teilen (1, 2, 3, 4, 5, 6; 12, 13, 14, 15, 16, 17, 18) in dem Abschnitt (9, 9') als Anordnungsvariante erfolgt.

8. Verfahren nach Anspruch 7, wobei die Auswahl der verschiedenen Schnitt-Teile (1, 2, 3, 4, 5, 6; 12, 13, 14, 15, 16, 17, 18) als Untermenge anhand des Flächeninhalts des Schnitt-Teils (1, 2, 3, 4, 5, 6; 12, 13, 14, 15, 16, 17, 18) und/oder anhand der Form des Schnitt-Teils (1, 2, 3, 4, 5, 6; 12, 13, 14, 15, 16, 17, 18) erfolgt.

9. Verfahren nach einem der Ansprüche 4 bis 8, wobei das Berechnen (103) des Platzbedarfs der Schnitt-Teile (1, 2, 3, 4, 5, 6; 12, 13, 14, 15, 16, 17, 18) im Abschnitt (9, 9') der Materialbahn (19) auf der Basis aller Schnitt-Teile (1, 2, 3, 4, 5, 6; 12, 13, 14, 15, 16, 17, 18) von zumindest einem Schneidmuster (7) in dem Abschnitt (9, 9') als Anordnungsvariante erfolgt.

10. Verfahren nach einem der Ansprüche 4 bis 9, wobei das Auswählen (105) der Anordnungsvariante erfolgt, sobald ein vordefinierter Schwellwert (20) für einen Materialverschnitt unterschritten ist oder sobald eine Berechnungszeit einen vordefinierten Schwellwert überschritten hat.

11. Verfahren nach einem der vorhergehenden Ansprüche, wobei der Abschnitt (9, 9') eine vordefinierte Länge aufweist, die als Eingangsparameter für das Verfahren festlegbar ist.

12. Verfahren nach einem der vorhergehenden Ansprüche, wobei eine Anzahl von mindestens einem zuzuschneidenden Schneidmuster (7) vorgegeben wird.

13. Verfahren nach einem der vorhergehenden Ansprüche, wobei für die Anordnung der Schnitt-Teile (1, 2, 3, 4, 5, 6; 12, 13, 14, 15, 16, 17, 18) in einem Abschnitt (9, 9') zumindest eines der Schnitt-Teile (1, 2, 3, 4, 5, 6; 12, 13, 14, 15, 16, 17, 18) relativ zu einem anderen Schnitt-Teil (1, 2, 3, 4, 5, 6; 12, 13, 14, 15, 16, 17, 18) verschoben oder rotiert wird.

14. Computerprogrammprodukt zum Anordnen von Schnitt-Teilen (1, 2, 3, 4, 5, 6; 12, 13, 14, 15, 16, 17, 18) in einem Abschnitt (9, 9') einer endlosen Materialbahn (19), wobei Programmteile aus einem Programmspeicher abrufbar sind, die die Durchführung des Verfahrens nach einem der Ansprüche 1 bis 13 unterstützen.

15. Vorrichtung zum Schneiden von Schnitt-Teilen (1, 2, 3, 4, 5, 6; 12, 13, 14, 15, 16, 17, 18) aus einer endlosen Materialbahn (19), umfassend:
ein Schneidwerkzeug, und
eine Steuerung eingerichtet, ein Verfahren gemäß einem der vorhergehenden Ansprüche 1 bis 13 auszuführen.

## Claims

1. Method for cutting cut pieces (1, 2, 3, 4, 5, 6; 12, 13, 14, 15, 16, 17, 18), the cut pieces (1, 2, 3, 4, 5, 6; 12, 13, 14, 15, 16, 17, 18) forming a cutting pattern (7), including the method steps of:
- cutting (106) the cut pieces (1, 2, 3, 4, 5, 6; 12, 13, 14, 15, 16, 17, 18), wherein the cut pieces (1, 2, 3, 4, 5, 6; 12, 13, 14, 15, 16, 17, 18) are arranged in a rectangular, repeating section (9, 9') of an endless material web (19), wherein at least one of the cut pieces (1, 2, 3, 4, 5, 6; 12, 13, 14, 15, 16, 17, 18) or at least one cutting pattern (7) is only partially included in the repeating section (9, 9'),
**characterized in that**
a predefined length of the material web (19) is not kept for completely arranging all cut pieces (1, 2, 3, 4, 5, 6; 12, 13, 14, 15, 16, 17, 18) of a cutting pattern (7).

2. The method according to claim 1, wherein the material web (19) is woven and the cut pieces (1, 2, 3, 4, 5, 6; 12, 13, 14, 15, 16, 17, 18) of the cutting pattern (7) form an airbag or the material web is a woven technical textile.

3. The method according to claim 1, wherein the material web (19) is made of one of the following materials:
- a woven technical textile;
- a metal sheet;
- a foil;
- paper or paperboard; and/or
- a non-woven fabric.

4. The method according to any one of the preceding claims, wherein, before the cutting step, the cut pieces (1, 2, 3, 4, 5, 6; 12, 13, 14, 15, 16, 17, 18) are arranged in the repeating section (9, 9') of the endless material web (19), said arranging comprising the following steps:
- calculating (103) a space requirement of the cut pieces (1, 2, 3, 4, 5, 6; 12, 13, 14, 15, 16, 17, 18) in the section (9, 9') of the material web (19) for at least one arrangement variant of the cut pieces (1, 2, 3, 4, 5, 6; 12, 13, 14, 15, 16, 17, 18) in this section (9, 9'), wherein at least one of the cut pieces (1, 2, 3, 4, 5, 6; 12, 13, 14, 15, 16, 17, 18) or a cutting pattern (7) is partially (10, 11) included in the section (9, 9'); and
- selecting (105) the arrangement variant of the cut pieces (1, 2, 3, 4, 5, 6; 12, 13, 14, 15, 16, 17, 18) for this section (9, 9') on the basis of the result of the calculating step.

5. The method according to claim 4, wherein the selected arrangement variant is applied to all of the repeating sections (9, 9').

6. The method according to any one of claims 4 or 5, wherein the calculation (103) of the space requirement of the cut pieces (1, 2, 3, 4, 5, 6; 12, 13, 14, 15, 16, 17, 18) in the section (9, 9') of the material web (19) is carried out on the basis of a single-type arrangement of the cut pieces (1, 2, 3, 4, 5, 6; 12, 13, 14, 15, 16, 17, 18) in the section (9, 9') as an arrangement variant.

7. The method according to any one of claims 4 to 6, wherein the calculation (103) of the space requirement of the cut pieces (1, 2, 3, 4, 5, 6; 12, 13, 14, 15, 16, 17, 18) in the section (9, 9') of the material web (19) is carried out on the basis of a subset of different cut pieces (1, 2, 3, 4, 5, 6; 12, 13, 14, 15, 16, 17, 18) in the section (9, 9') as an arrangement variant.

8. The method according to claim 7, wherein the selection of the different cut pieces (1, 2, 3, 4, 5, 6; 12, 13, 14, 15, 16, 17, 18) is based on a subset according to an area of the cut piece (1, 2, 3, 4, 5, 6; 12, 13, 14, 15, 16, 17, 18) and/or a shape of the cut piece (1, 2, 3, 4, 5, 6; 12, 13, 14, 15, 16, 17, 18).

9. The method according to any one of claims 4 to 8, wherein the calculation (103) of the space requirement of the cut pieces (1, 2, 3, 4, 5, 6; 12, 13, 14, 15, 16, 17, 18) in the section (9, 9') of the material web (19) is carried out on the basis of all cut pieces (1, 2, 3, 4, 5, 6; 12, 13, 14, 15, 16, 17, 18) of at least one cutting pattern (7) in the section (9, 9') as an arrangement variant.

10. The method according to any one of claims 4 to 9, wherein the selection (105) of the arrangement variant is carried out as soon as a predefined threshold value (20) for a material waste is reached, or as soon as a calculation time has exceeded a predefined threshold value.

11. The method according to any one of the preceding claims, the section (9, 9') having a predefined length which can be set as input parameter for the method.

12. The method according to any one of the preceding claims, wherein a number of at least one cutting pattern (7) to be cut is predetermined.

13. The method according to any one of the preceding claims, wherein at least one of the cut pieces (1, 2, 3, 4, 5, 6; 12, 13, 14, 15, 16, 17, 18) is displaced or rotated relative to another cut piece (1, 2, 3, 4, 5, 6; 12, 13, 14, 15, 16, 17, 18) for the arrangement of the cut pieces (1, 2, 3, 4, 5, 6; 12, 13, 14, 15, 16, 17, 18) in a section (9, 9').

14. A computer program product for arranging cut pieces (1, 2, 3, 4, 5, 6; 12, 13, 14, 15, 16, 17, 18) in a section (9, 9') of an endless material web (19), wherein program parts can be retrieved from a program memory which support the execution of the method according to any one of claims 1 to 13.

15. An apparatus for cutting cut pieces (1, 2, 3, 4, 5, 6; 12, 13, 14, 15, 16, 17, 18) from an endless material web (19), comprising:
a cutting tool, and
a controller configured to perform the method according to any one of the preceding claims 1 to 13.

## Revendications

1. Procédé de découpe de pièces découpées (1, 2, 3, 4, 5, 6 ; 12, 13, 14, 15, 16, 17, 18), dans lequel les pièces découpées (1, 2, 3, 4, 5, 6 ; 12, 13, 14, 15, 16, 17, 18) forment un modèle de coupe (13), comportant les étapes de procédé consistant à :
- découper (106) les pièces découpées (1, 2, 3, 4, 5, 6 ; 12, 13, 14, 15, 16, 17, 18), dans lequel les pièces découpées (1, 2, 3, 4, 5, 6 ; 12, 13, 14, 15, 16, 17, 18) sont agencées dans une portion rectangulaire répétitive (9, 9') d'une bande de matière sans fin (19), dans lequel au moins une des pièces découpées (1, 2, 3, 4, 5, 6 ; 12, 13, 14, 15, 16, 17, 18) ou au moins un modèle de coupe (7) n'est contenu que partiellement dans la portion répétitive (9, 9').
**caractérisé en ce qu'**une longueur prédéfinie de la bande de matière (19) n'est pas maintenue pour agencer entièrement toutes les pièces découpées (1, 2, 3, 4, 5, 6 ; 12, 13, 14, 15, 16, 17, 18) d'un modèle de coupe (7).

2. Procédé selon la revendication 1, dans lequel la bande de matière (19) est tissée et les pièces découpées (1, 2, 3, 4, 5, 6 ; 12, 13, 14, 15, 16, 17, 18) du modèle de coupe (7) forment un coussin gonflable ou la bande de matière est un textile technique tissé.

3. Procédé selon la revendication 1, dans lequel la bande de matière (19) est constituée de l'une des matières suivantes :
- textile technique tissé ;
- tôle ;
- film ; ;
- papier ou carton ; et/ou
- tissu non tissé.

4. Procédé selon l'une des revendications précédentes, dans lequel, avant l'étape de découpe, les pièces découpées (1, 2, 3, 4, 5, 6 ; 12, 13, 14, 15, 16, 17, 18) sont agencées dans la portion répétitive (9, 9') de la bande de matière sans fin (19), dans lequel l'agencement comprend les étapes suivantes consistant à :
- calculer (103) un encombrement des pièces découpées (1, 2, 3, 4, 5, 6 ; 12, 13, 14, 15, 16, 17, 18) dans la portion (9, 9') de la bande de matière (19) pour au moins une variante d'agencement des pièces découpées (1, 2, 3, 4, 5, 6 ; 12, 13, 14, 15, 16, 17, 18) dans cette portion (9, 9'), dans lequel d'au moins une des pièces découpées (1, 2, 3, 4, 5, 6; 12, 13, 14, 15, 16, 17, 18) ou un modèle de coupe (7) est partiellement (10, 11) contenu dans la portion (9, 9'); et
- sélectionner (105) la variante d'agencement des pièces découpées (1, 2, 3, 4, 5, 6 ; 12, 13, 14, 15, 16, 17, 18) pour cette portion (9, 9') sur la base du résultat de l'étape de calcul.

5. Procédé selon la revendication 4, dans lequel la variante d'agencement sélectionnée est appliquée à toutes les portions répétitives (9, 9').

6. Procédé selon l'une des revendications 4 ou 5, dans lequel le calcul (103) de l'encombrement des pièces découpées (1, 2, 3, 4, 5, 6 ; 12, 13, 14, 15, 16, 17, 18) s'effectue dans la portion (9, 9') de la bande de matière (19) sur la base d'un agencement par taille des pièces découpées (1, 2, 3, 4, 5, 6 ; 12, 13, 14, 15, 16, 17, 18) dans la portion (9, 9') en tant que variante d'agencement.

7. Procédé selon l'une des revendications 4 à 6, dans lequel le calcul (103) de l'encombrement des pièces découpées (1, 2, 3, 4, 5, 6 ; 12, 13, 14, 15, 16, 17, 18) dans la portion (9, 9') de la bande de matière (19) est effectué sur la base d'un sous-ensemble de différentes pièces découpées (1, 2, 3, 4, 5, 6 ; 12, 13, 14, 15, 16, 17, 18) dans la portion (9, 9') en tant que variante d'agencement.

8. Procédé selon la revendication 7, dans lequel la sélection des différentes pièces découpées (1, 2, 3, 4, 5, 6 ; 12, 13, 14, 15, 16, 17, 18) en tant que sous-ensemble est effectuée au moyen de l'aire de surface de la pièce découpée (1, 2, 3, 4, 5, 6 ; 12, 13, 14, 15, 16, 17, 18) et/ou au moyen de la forme de la pièce découpée (1, 2, 3, 4, 5, 6 ; 12, 13, 14, 15, 16, 17, 18).

9. Procédé selon l'une des revendications 4 à 8, dans lequel le calcul (103) de l'encombrement des pièces découpées (1, 2, 3, 4, 5, 6 ; 12, 13, 14, 15, 16, 17, 18) dans la portion (9, 9') de la bande de matière (15) est effectué sur la base de toutes les pièces découpées (1, 2, 3, 4, 5, 6 ; 12, 13, 14, 15, 16, 17, 18) d'au moins un modèle de coupe (7) dans la portion (9, 9') en tant que variante d'agencement.

10. Procédé selon l'une des revendications 4 à 9, dans lequel la sélection (105) de la variante d'agencement a lieu dès qu'une valeur de seuil prédéfinie (20) pour une rognure de matière est atteinte ou dès qu'un temps de calcul a dépassé une valeur de seuil prédéfinie.

11. Procédé selon l'une des revendications précédentes, dans lequel la portion (9, 9') a une longueur prédéfinie qui peut être fixée en tant que paramètre d'entrée pour le procédé.

12. Procédé selon l'une des revendications précédentes, dans lequel un nombre d'au moins un modèle de coupe (7) à découper est prédéterminé.

13. Procédé selon l'une des revendications précédentes, dans lequel, pour l'agencement des pièces découpées (1, 2, 3, 4, 5, 6 ; 12, 13, 14, 15, 16, 17, 18) dans une portion (9, 9'), au moins une des pièces découpées (1, 2, 3, 4, 5, 6 ; 12, 13, 14, 15, 16, 17, 18) est déplacée ou tournée par rapport à une autre pièce découpée (1, 2, 3, 4, 5, 6 ; 12, 13, 14, 15, 16, 17, 18).

14. Produit de programme informatique destiné à agencer des pièces découpées (1, 2, 3, 4, 5, 6 ; 12, 13, 14, 15, 16, 17, 18) dans une portion (9, 9') d'une bande de matière sans fin (19), dans lequel des parties de programme peuvent être récupérées d'une mémoire de programme qui prend en charge la mise en œuvre du procédé selon l'une des revendications 1 à 13.

15. Dispositif pour découper des pièces découpées (1, 2, 3, 4, 5, 6 ; 12, 13, 14, 15, 16, 17, 18) à partir d'une bande de matière sans fin (19), comprenant :
un outil de coupe, et
une commande configurée pour mettre en œuvre un procédé selon l'une des revendications 1 à 13 précédentes.
